# EUROPEAN PATENT APPLICATION

(11) **EP 4 708 952 A1**
(43) Date of publication of application: **11.03.2026**
(21) Application number: 24814364.6
(22) Date of filing: 25.05.2024
(51) Int. Cl.: H04W 24/04

(54) **COMMUNICATION METHOD AND RELATED APPARATUS**

(30) Priority: 27.05.2023 CN 202310613361
(71) Applicant: Huawei Technologies Co., Ltd., Shenzhen, Guangdong 518129 (CN)
(72) Inventor: XU, Yishan, Shenzhen, Guangdong 518129 (CN); ZHOU, Runze, Shenzhen, Guangdong 518129 (CN); HAN, Zhilin, Shenzhen, Guangdong 518129 (CN)
(74) Representative: MERH-IP Matias Erny Reichl Hoffmann Patentanwälte PartG mbB
(86) International application number: PCT/CN2024/095359
(87) International publication number: WO 2024/245167

(57) **Abstract**

A communication method and a related apparatus are provided. The method includes: An access network device determines a target reader role of a terminal device. The access network device sends first information to the terminal device, where the first information indicates the terminal device to execute the target reader role. The method in this application improves communication reliability.

## Description

This application claims priority to Chinese Patent Application No. 202310613361.2, filed with the China National Intellectual Property Administration on May 27, 2023, and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

The internet of things (internet of things, IoT) is often described as "internet of things connected". One type of the IoT network is the ambient power-enabled internet of things (Ambient Power-enabled internet of things, Ambient IoT or A-IoT). In an A-IoT architecture, there may be passive, semi-passive, semi-active, active terminals, a reader (reader), and a server. The passive, semi-passive, semi-active, and active terminals are terminal devices with ultra-low power consumption, and extract energy from their surroundings to maintain normal operation. For example, a radio electromagnetic wave (which is a carrier signal (carrier signal)) sent by the reader may serve as an energy source of the passive, semi-passive, semi-active, and active terminals and a carrier signal carrying data, and the passive, semi-passive, semi-active, and active terminals perform data transmission by backscattering the carrier signal sent by the reader. The server is configured to send an instruction, for example, a data read or data write instruction, so that the reader communicates with the passive, semi-passive, semi-active, and active terminals, thereby achieving data identification and exchange. The reader may be an access network device or a terminal device. Currently, when a terminal device serves as a reader, communication reliability may be low.

### SUMMARY

This application provides a communication method and a related apparatus, to improve communication reliability.

According to a first aspect, this application provides a communication method. The method is performed by a communication apparatus. The communication apparatus may be an access network device, or may be a module in the access network device. In the method, the access network device determines a target reader role of a terminal device, and sends first information to the terminal device, where the first information indicates the terminal device to execute the target reader role.

In this application, the access network device may indicate the target reader role to the terminal device according to a communication requirement, so that the terminal device executes the target reader role. This improves communication reliability.

In a possible implementation, the determining the target reader role of the terminal device includes:
obtaining one or more authorized reader roles of the terminal device; and
determining the target reader role of the terminal device from the one or more authorized reader roles.

In this implementation, the access network device may first obtain the authorized reader role of the terminal device, and then determine the target reader role from the authorized reader role. This improves communication reliability.

In a possible implementation, the obtaining the one or more authorized reader roles of the terminal device includes:
receiving the one or more authorized reader roles of the terminal device from a first core network device.

In this implementation, the first core network device may determine, based on capability information of the terminal device and/or subscription data of the terminal device, the one or more authorized reader roles of the terminal device, and send the one or more authorized reader roles to the access network device. This implementation in which a network side determines the authorized reader role with reference to the capability information and subscription information of the terminal device to obtain the target reader role is more practical.

In a possible implementation, the obtaining the one or more authorized reader roles of the terminal device includes:
determining the one or more authorized reader roles of the terminal device based on second information, where the second information includes one or more of the following information: capability information of the terminal device and/or subscription data of the terminal device.

The capability information of the terminal device indicates a reader role supported by the terminal device, and the subscription data of the terminal device indicates a reader role that the terminal device is allowed to serve as.

In this implementation, the access network device may determine the one or more authorized reader roles of the terminal device based on the second information. This is easy to implement, enhances solution implementation diversity, and has high applicability.

In a possible implementation, the method further includes:
sending the one or more authorized reader roles of the terminal device to a first core network device, so that the first core network device sends the one or more authorized reader roles of the terminal device to the terminal device.

In this implementation, when the access network device determines an authorized reader role, the access network device may send the authorized reader role of the terminal device that is determined by the access network device to the access network device, to subsequently send the authorized reader role to the terminal device. In this way, when learning of the authorized reader role of the terminal device, the terminal device may send first request information to the access network device, to request to serve as a first reader role. Therefore, subsequently, the access network device may determine the target reader role with reference to the first request information, which is highly applicable.

In a possible implementation, the method further includes:
obtaining third information, where the third information includes one or more of the following information: the capability information of the terminal device, a first request message from the terminal device, a status of a link between the access network device and an internet of things terminal, or a radio resource status of the access network device, the capability information of the terminal device indicates the reader role supported by the terminal device, and the first request message is used to request to serve as a first reader role.

The determining the target reader role of the terminal device from the one or more authorized reader roles includes:
determining the target reader role from the one or more authorized reader roles based on the third information.

In this implementation, the access network device may specifically determine the target reader role from the authorized reader role based on the third information (for example, the link status or the radio resource status). This better meets a communication requirement, improves accuracy of the determined target reader role, and further improves communication reliability.

In a possible implementation, the determining the target reader role of the terminal device from the one or more authorized reader roles based on the third information includes:
determining, as the target reader role, the reader role that is supported by the terminal device and that is indicated by the capability information of the terminal device in the one or more authorized reader roles; or
determining the first reader role in the one or more authorized reader roles as the target reader role; or
when an uplink budget between the access network device and the internet of things terminal is less than a downlink budget, and the one or more authorized reader roles include an uplink assisted reader, determining that the target reader role is an uplink assisted reader; or
when a downlink budget between the access network device and the internet of things terminal is less than an uplink budget, and the one or more authorized reader roles include a downlink assisted reader, determining that the target reader role is a downlink assisted reader.

In this implementation, when downlink quality of the internet of things terminal is poor, and the internet of things terminal cannot successfully receive downlink data directly via the access network device, if the target reader role that can be executed by the terminal device is an assisted reader or a downlink assisted reader, the access network device may first send downlink data of the internet of things terminal to the terminal device, and the terminal device forwards the downlink data to the internet of things terminal at a relatively short distance, thereby ensuring downlink transmission quality. Alternatively, when uplink quality of the internet of things terminal is poor, and the internet of things terminal cannot successfully send uplink data to the access network device directly via the access network device, if the target reader role that can be executed by the terminal device is an assisted reader or an uplink assisted reader, the internet of things terminal may first send uplink data of the internet of things terminal to the terminal device at a relatively short distance, and the terminal device forwards the uplink data to the access network device, thereby ensuring uplink transmission quality.

In a possible implementation, the determining the target reader role of the terminal device includes:
obtaining fourth information, where the fourth information includes one or more of the following information: capability information of the terminal device, subscription data of the terminal device, a first request message from the terminal device, a status of a link between the access network device and an internet of things terminal, or a radio resource status of the access network device, the capability information of the terminal device indicates a reader role supported by the terminal device, and the first request message is used to request to serve as a first reader role; and
determining the target reader role based on the fourth information.

In this implementation, the access network device may directly determine the target reader role comprehensively based on the fourth information, which is highly operable.

In a possible implementation, the method further includes:
receiving the capability information of the terminal device that is sent by the first core network device, where the first core network device supports internet of things service management; or
receiving the capability information of the terminal device that is sent by the terminal device.

In this implementation, the terminal device may send/forward/transparently transmit the capability information of the terminal device to the first core network device (for example, an AMF) via the access network device, and the first core network device sends the capability information of the terminal device that is obtained through parsing to the access network device. This facilitates forward protocol compatibility. Alternatively, the terminal device may directly send the capability information of the terminal device to the access network device. This improves solution implementation diversity.

In a possible implementation, the receiving the capability information of the terminal device that is sent by the first core network device includes:
in a registration process, receiving a context request or a terminal device capability check request sent by the first core network device, where the context request or the terminal device capability check request includes the capability information of the terminal device.

In this implementation, when the first core network device sends the capability information of the terminal device to the access network device, the capability information of the terminal device may be carried in an existing message, for example, the context request (for example, a context setup request or a context modification request) or the terminal device capability check request. This improves solution applicability.

In a possible implementation, the method further includes:
receiving first indication information from the terminal device, where the first indication information indicates that the terminal device supports an internet of things service; and
selecting, based on the first indication information, the first core network device that supports management of the internet of things service.

In this implementation, the terminal device may send the first indication information to the access network device, so that the access network device selects, based on the first indication information, the first core network device (for example, the AMF) that supports management of the internet of things service.

In a possible implementation, the method further includes:
when a first cell accessed by the terminal device supports an internet of things service, selecting the first core network device based on the first cell accessed by the terminal device, where the first core network device supports management of the internet of things service.

In a possible implementation, the method further includes:
broadcasting second indication information, where the second indication information indicates that the first cell supports the internet of things service, or the second indication information indicates that one or more cells in the access network device support the internet of things service, so that the terminal device accesses, based on the second indication information, the first cell that supports the internet of things service, where the one or more cells include the first cell.

In a possible implementation, the method further includes:
sending resource configuration information to the terminal device, where the resource configuration information includes one or more of the following information: frequency information, frequency band information, a transmit power, a transmission bandwidth, a transmission rate, or execution duration, and the resource configuration information is used by the terminal device to execute the target reader role.

In a possible implementation, after the sending the first information to the terminal device, the method further includes:
receiving fifth information from the terminal device, where the fifth information indicates whether the terminal device accepts execution of the target reader role.

In this implementation, after the terminal device receives the first information indicating the target reader role, the terminal device may further feed back, to the access network device, the fifth information indicating whether to accept execution of the target reader role. This improves solution integrity.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

According to a second aspect, this application provides a communication method. The method is performed by a communication apparatus. The communication apparatus may be a terminal device, or may be a module in the terminal device. In the method, the terminal device sends a first request message to an access network device, where the first request message is used to request to serve as a first reader role; and the terminal device receives first information from the access network device, where the first information indicates the terminal device to execute a target reader role.

In a possible implementation, the method further includes:
receiving one or more authorized reader roles of the terminal device from a first core network device; and
determining the first reader role based on the one or more authorized reader roles of the terminal device.

In a possible implementation, the method further includes:
sending capability information of the terminal device to the access network device, where the capability information of the terminal device indicates a reader capability supported by the terminal device, and the capability information of the terminal device is used to determine the target reader role.

In a possible implementation, the method further includes:
sending first indication information to the access network device, where the first indication information indicates that the terminal device supports an internet of things service, and the first indication information is used to determine the first core network device that supports management of the internet of things service.

In a possible implementation, a cell accessed by the terminal device is a second cell, and the second cell does not support the internet of things service.

The method further includes:
receiving second indication information from the access network device, where the second indication information indicates that a first cell supports the internet of things service, or the second indication information indicates that one or more cells in the access network device support the internet of things service, and the one or more cells include the first cell; and
performing cell reselection or cell handover based on the second indication information, to access the first cell.

In this implementation, the second indication information may be carried in a system information broadcast. The terminal device may select, based on the support for the internet of things service that is broadcast by the access network device, to access a cell (for example, the first cell) that supports the internet of things service.

In a possible implementation, a cell accessed by the terminal device is a second cell in the access network device, and the second cell does not support the internet of things service.

The method further includes:
receiving at least one cell identifier from the first core network device, where a cell corresponding to the at least one cell identifier is a cell that supports the internet of things service in the access network device, and the cell corresponding to the at least one cell identifier includes a first cell; and
performing cell reselection or cell handover based on the at least one cell identifier, to access the first cell.

In this implementation, the terminal device may reselect/select/be handed over to a cell (for example, the first cell) that supports the internet of things service in cells that support the internet of things service and that are sent by the first core network device.

In a possible implementation, a cell accessed by the terminal device is a second cell, and none of cells in an access network device in which the second cell is located supports the internet of things service.

The method further includes:
receiving at least one cell identifier from the first core network device, where a cell corresponding to the at least one cell identifier is a cell that supports the internet of things service in the access network device, and the cell corresponding to the at least one cell identifier includes a first cell; and
performing cell reselection or cell handover based on the at least one cell identifier, to access the first cell.

In a possible implementation, the method further includes:
receiving resource configuration information from the access network device, where the resource configuration information includes one or more of the following information: frequency information, frequency band information, a transmit power, a transmission bandwidth, a transmission rate, or execution duration, and the resource configuration information is used by the terminal device to execute the target reader role.

In a possible implementation, after the receiving the first information from the access network device, the method further includes:
sending fifth information to the access network device, where the fifth information indicates whether the terminal device accepts execution of the target reader role.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

According to a third aspect, this application provides a communication method. The method is performed by a communication apparatus. The communication apparatus may be a first core network device, or may be a module in the first core network device. In the method, the first core network device obtains one or more authorized reader roles of a terminal device; and the first core network device sends the one or more authorized reader roles of the terminal device to the terminal device, where the one or more authorized reader roles are used to determine a target reader role.

In a possible implementation, the obtaining the one or more authorized reader roles of the terminal device includes:
determining the one or more authorized reader roles of the terminal device based on capability information of the terminal device and/or subscription data of the terminal device, where the capability information of the terminal device indicates a reader capability supported by the terminal device, and the subscription data of the terminal device indicates a reader role that the terminal device is allowed to serve as.

In a possible implementation, the method further includes:
sending the one or more authorized reader roles of the terminal device to an access network device.

In a possible implementation, the obtaining the one or more authorized reader roles of the terminal device includes:
receiving the one or more authorized reader roles of the terminal device from an access network device.

In a possible implementation, before the receiving the one or more authorized reader roles of the terminal device from the access network device, the method further includes:
sending capability information of the terminal device to the access network device.

In a possible implementation, the method further includes:
receiving the capability information from the terminal device.

In a possible implementation, the method further includes:
sending at least one cell identifier to the terminal device, where a cell corresponding to the at least one cell identifier includes a first cell, the cell corresponding to the at least one cell identifier is a cell that supports an internet of things service, and the at least one cell identifier is used for cell reselection or cell handover, so that the terminal device accesses the first cell.

In a possible implementation, the first core network device is a first core network device that supports the internet of things service.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

According to a fourth aspect, this application provides a communication method. The method is performed by a communication apparatus. The communication apparatus may be a first core network device, or may be a module in the first core network device. In the method, the first core network device obtains one or more authorized reader roles of a terminal device; and the first core network device sends the one or more authorized reader roles of the terminal device to an access network device, where the one or more authorized reader roles are used to determine a target reader role.

In a possible implementation, the obtaining the one or more authorized reader roles of the terminal device includes:
determining the one or more authorized reader roles of the terminal device based on capability information of the terminal device and/or subscription data of the terminal device, where the capability information of the terminal device indicates a reader capability supported by the terminal device, and the subscription data of the terminal device indicates a reader role that the terminal device is allowed to serve as.

In a possible implementation, the method further includes:
receiving the capability information from the terminal device.

In a possible implementation, the method further includes:
receiving the subscription data of the terminal device from a second core network device.

In a possible implementation, the method further includes:
sending the one or more authorized reader roles of the terminal device to the terminal device.

In a possible implementation, the method further includes:
sending at least one cell identifier to the terminal device, where a cell corresponding to the at least one cell identifier includes a first cell, the cell corresponding to the at least one cell identifier is a cell that supports an internet of things service, and the at least one cell identifier is used for cell reselection or cell handover, so that the terminal device accesses the first cell.

In a possible implementation, the first core network device is a first core network device that supports the internet of things service.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

In a possible implementation, the second core network device includes a unified data management device, a user data storage device, a network capability exposure device, a policy control device, a session management device, a tag management device, an ambient power-enabled internet of things device, an ambient power-obtained internet of things terminal management device, or an authentication service device.

According to a fifth aspect, this application provides a communication apparatus. The communication apparatus may be an access network device, or may be a module in the access network device. The communication apparatus includes:
a processing unit, configured to determine a target reader role of a terminal device; and
a transceiver unit, configured to send first information to the terminal device, where the first information indicates the terminal device to execute the target reader role.

In a possible implementation, when determining the target reader role of the terminal device, the processing unit is configured to:
obtain one or more authorized reader roles of the terminal device; and
determine the target reader role of the terminal device from the one or more authorized reader roles.

In a possible implementation, when obtaining the one or more authorized reader roles of the terminal device, the processing unit is configured to:
receive the one or more authorized reader roles of the terminal device from a first core network device by using the transceiver unit.

In a possible implementation, when obtaining the one or more authorized reader roles of the terminal device, the processing unit is configured to:
determine the one or more authorized reader roles of the terminal device based on second information, where the second information includes one or more of the following information: capability information of the terminal device and/or subscription data of the terminal device.

The capability information of the terminal device indicates a reader role supported by the terminal device, and the subscription data of the terminal device indicates a reader role that the terminal device is allowed to serve as.

In a possible implementation, the transceiver unit is configured to:
send the one or more authorized reader roles of the terminal device to a first core network device, so that the first core network device sends the one or more authorized reader roles of the terminal device to the terminal device.

In a possible implementation, the processing unit is configured to:
obtain third information, where the third information includes one or more of the following information: the capability information of the terminal device, a first request message from the terminal device, a status of a link between the access network device and an internet of things terminal, or a radio resource status of the access network device, the capability information of the terminal device indicates the reader role supported by the terminal device, and the first request message is used to request to serve as a first reader role; and
determine the target reader role from the one or more authorized reader roles based on the third information.

In a possible implementation, when determining the target reader role of the terminal device from the one or more authorized reader roles based on the third information, the processing unit is configured to:
determine, as the target reader role, the reader role that is supported by the terminal device and that is indicated by the capability information of the terminal device in the one or more authorized reader roles; or
determine the first reader role in the one or more authorized reader roles as the target reader role; or
when an uplink budget between the access network device and the internet of things terminal is less than a downlink budget, and the one or more authorized reader roles include an uplink assisted reader, determine that the target reader role is an uplink assisted reader; or
when a downlink budget between the access network device and the internet of things terminal is less than an uplink budget, and the one or more authorized reader roles include a downlink assisted reader, determine that the target reader role is a downlink assisted reader.

In a possible implementation, when determining the target reader role of the terminal device, the processing unit is configured to:
obtain fourth information, where the fourth information includes one or more of the following information: capability information of the terminal device, subscription data of the terminal device, a first request message from the terminal device, a status of a link between the access network device and an internet of things terminal, or a radio resource status of the access network device, the capability information of the terminal device indicates a reader role supported by the terminal device, and the first request message is used to request to serve as a first reader role; and
determine the target reader role based on the fourth information.

In a possible implementation, the transceiver unit is configured to:
receive the capability information of the terminal device that is sent by the first core network device, where the first core network device supports internet of things service management; or
receive the capability information of the terminal device that is sent by the terminal device.

In a possible implementation, when receiving the capability information of the terminal device that is sent by the first core network device, the transceiver unit is configured to:
in a registration process, receive a context request or a terminal device capability check request sent by the first core network device, where the context request or the terminal device capability check request includes the capability information of the terminal device.

In a possible implementation, the transceiver unit is further configured to receive first indication information from the terminal device, where the first indication information indicates that the terminal device supports an internet of things service.

The processing unit is further configured to select, based on the first indication information, the first core network device that supports management of the internet of things service.

In a possible implementation, the processing unit is configured to:
when a first cell accessed by the terminal device supports the internet of things service, select the first core network device based on the first cell accessed by the terminal device, where the first core network device supports management of the internet of things service.

In a possible implementation, the transceiver unit is configured to:
broadcast second indication information, where the second indication information indicates that the first cell supports the internet of things service, or the second indication information indicates that one or more cells in the access network device support the internet of things service, so that the terminal device accesses, based on the second indication information, the first cell that supports the internet of things service, where the one or more cells include the first cell.

In a possible implementation, the transceiver unit is configured to:
send resource configuration information to the terminal device, where the resource configuration information includes one or more of the following information: frequency information, frequency band information, a transmit power, a transmission bandwidth, a transmission rate, or execution duration, and the resource configuration information is used by the terminal device to execute the target reader role.

In a possible implementation, after sending the first information to the terminal device, the transceiver unit is further configured to:
receive fifth information from the terminal device, where the fifth information indicates whether the terminal device accepts execution of the target reader role.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

According to a sixth aspect, this application provides a communication apparatus. The communication apparatus may be a terminal device, or may be a module in the terminal device. The communication apparatus includes:
a transceiver unit, configured to send a first request message to an access network device, where the first request message is used to request to serve as a first reader role.

The transceiver unit is configured to receive first information from the access network device, where the first information indicates the terminal device to execute a target reader role.

In a possible implementation, the transceiver unit is further configured to receive one or more authorized reader roles of the terminal device from a first core network device.

The processing unit is further configured to determine the first reader role based on the one or more authorized reader roles of the terminal device.

In a possible implementation, the transceiver unit is configured to:
send capability information of the terminal device to the access network device, where the capability information of the terminal device indicates a reader capability supported by the terminal device, and the capability information of the terminal device is used to determine the target reader role.

In a possible implementation, the transceiver unit is configured to:
send first indication information to the access network device, where the first indication information indicates that the terminal device supports an internet of things service, and the first indication information is used to determine the first core network device that supports management of the internet of things service.

In a possible implementation, a cell accessed by the terminal device is a second cell, and the second cell does not support the internet of things service.

The transceiver unit is further configured to receive second indication information from the access network device, where the second indication information indicates that a first cell supports the internet of things service, or the second indication information indicates that one or more cells in the access network device support the internet of things service, and the one or more cells include the first cell.

The processing unit is further configured to perform cell reselection or cell handover based on the second indication information, to access the first cell.

In a possible implementation, a cell accessed by the terminal device is a second cell in the access network device, and the second cell does not support the internet of things service.

The transceiver unit is further configured to:
receive at least one cell identifier from the first core network device, where a cell corresponding to the at least one cell identifier is a cell that supports the internet of things service in the access network device, and the cell corresponding to the at least one cell identifier includes a first cell; and
perform cell reselection or cell handover based on the at least one cell identifier, to access the first cell.

In a possible implementation, a cell accessed by the terminal device is a second cell, and none of cells in an access network device in which the second cell is located supports the internet of things service.

The processing unit is further configured to receive at least one cell identifier from the first core network device, where a cell corresponding to the at least one cell identifier is a cell that supports the internet of things service in the access network device, and the cell corresponding to the at least one cell identifier includes a first cell.

The processing unit is further configured to perform cell reselection or cell handover based on the at least one cell identifier, to access the first cell.

In a possible implementation, the transceiver unit is further configured to:
receive resource configuration information from the access network device, where the resource configuration information includes one or more of the following information: frequency information, frequency band information, a transmit power, a transmission bandwidth, a transmission rate, or execution duration, and the resource configuration information is used by the terminal device to execute the target reader role.

In a possible implementation, after receiving the first information from the access network device, the transceiver unit is further configured to:
send fifth information to the access network device, where the fifth information indicates whether the terminal device accepts execution of the target reader role.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

According to a seventh aspect, this application provides a communication apparatus. The communication apparatus may be a first core network device, or may be a module in the first core network device. The communication apparatus includes:
a processing unit, configured to obtain one or more authorized reader roles of a terminal device; and
a transceiver unit, configured to send the one or more authorized reader roles of the terminal device to the terminal device, where the one or more authorized reader roles are used to determine a target reader role.

In a possible implementation, when obtaining the one or more authorized reader roles of the terminal device, the processing unit is configured to:
determine the one or more authorized reader roles of the terminal device based on capability information of the terminal device and/or subscription data of the terminal device, where the capability information of the terminal device indicates a reader capability supported by the terminal device, and the subscription data of the terminal device indicates a reader role that the terminal device is allowed to serve as.

In a possible implementation, the transceiver unit is configured to:
send the one or more authorized reader roles of the terminal device to an access network device.

In a possible implementation, when obtaining the one or more authorized reader roles of the terminal device, the processing unit is configured to:
receive the one or more authorized reader roles of the terminal device from an access network device by using the transceiver unit.

In a possible implementation, before receiving the one or more authorized reader roles of the terminal device from the access network device, the transceiver unit is configured to:
send capability information of the terminal device to the access network device.

In a possible implementation, the transceiver unit is configured to:
receive the capability information from the terminal device.

In a possible implementation, the transceiver unit is configured to:
send at least one cell identifier to the terminal device, where a cell corresponding to the at least one cell identifier includes a first cell, the cell corresponding to the at least one cell identifier is a cell that supports an internet of things service, and the at least one cell identifier is used for cell reselection or cell handover, so that the terminal device accesses the first cell.

In a possible implementation, the first core network device is a first core network device that supports the internet of things service.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

According to an eighth aspect, this application provides a communication apparatus. The communication apparatus may be a first core network device, or may be a module in the first core network device. The communication apparatus includes:
a processing unit, configured to obtain one or more authorized reader roles of a terminal device; and
a transceiver unit, configured to send the one or more authorized reader roles of the terminal device to an access network device, where the one or more authorized reader roles are used to determine a target reader role.

In a possible implementation, when obtaining the one or more authorized reader roles of the terminal device, the processing unit is configured to:
determine the one or more authorized reader roles of the terminal device based on capability information of the terminal device and/or subscription data of the terminal device, where the capability information of the terminal device indicates a reader capability supported by the terminal device, and the subscription data of the terminal device indicates a reader role that the terminal device is allowed to serve as.

In a possible implementation, the transceiver unit is further configured to:
receive the capability information from the terminal device.

In a possible implementation, the transceiver unit is further configured to:
receive the subscription data of the terminal device from a second core network device.

In a possible implementation, the transceiver unit is further configured to:
send the one or more authorized reader roles of the terminal device to the terminal device.

In a possible implementation, the transceiver unit is further configured to:
send at least one cell identifier to the terminal device, where a cell corresponding to the at least one cell identifier includes a first cell, the cell corresponding to the at least one cell identifier is a cell that supports an internet of things service, and the at least one cell identifier is used for cell reselection or cell handover, so that the terminal device accesses the first cell.

In a possible implementation, the first core network device is a first core network device that supports the internet of things service.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

In a possible implementation, the second core network device includes a unified data management device, a user data storage device, a network capability exposure device, a policy control device, a session management device, a tag management device, an ambient power-enabled internet of things device, an ambient power-obtained internet of things terminal management device, or an authentication service device.

According to a ninth aspect, this application provides a communication apparatus. The communication apparatus includes a processor, and the processor is configured to execute a computer program, so that the communication apparatus performs the method according to any one of the first aspect, the second aspect, the third aspect, or the fourth aspect.

In a possible design, the communication apparatus may be a chip or a device including a chip that implements the method according to the first aspect, the second aspect, the third aspect, or the fourth aspect.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory.

According to a tenth aspect, this application provides a communication apparatus. The communication apparatus includes a processor and an interface circuit, the interface circuit is configured to: receive a signal from another communication apparatus other than the communication apparatus and transmit the signal to the processor, or send a signal from the processor to another communication apparatus other than the communication apparatus, and the processor is configured to implement the method according to any one of the first aspect, the second aspect, the third aspect, or the fourth aspect by using a logic circuit or by executing code instructions.

According to an eleventh aspect, this application provides a computer-readable storage medium. The storage medium stores a computer program or instructions, and when the computer program or the instructions are executed by a computer, the method according to any one of the first aspect, the second aspect, the third aspect, or the fourth aspect is implemented.

According to a twelfth aspect, this application provides a computer program product. When a computer reads and executes the computer program product, the computer is enabled to perform the method according to any one of the first aspect, the second aspect, the third aspect, or the fourth aspect.

According to a thirteenth aspect, this application provides a communication system. The communication system includes a terminal device and an access network device. The access network device is configured to implement the method according to the first aspect, the terminal device may be configured to implement the method according to the second aspect, and a first core network device is configured to implement the method according to any one of the third aspect or the fourth aspect.

For beneficial effects of the fifth aspect to the thirteenth aspect, refer to the beneficial effects of the first aspect to the fourth aspect. Details are not described herein again.

### BRIEF DESCRIPTION OF DRAWINGS

FIG. 1 is a diagram of an architecture of a communication system to which an embodiment of this application is applied;
FIG. 2 is a diagram of another architecture of a communication system to which an embodiment of this application is applied;
FIG. 3 is a diagram of an architecture of a protocol stack to which this application is applicable;
FIG. 4 is a diagram of another architecture of a protocol stack to which this application is applicable;
FIG. 5 is a schematic flowchart of a communication method according to an embodiment of this application;
FIG. 6 is another schematic flowchart of a communication method according to an embodiment of this application;
FIG. 7 is another schematic flowchart of a communication method according to an embodiment of this application;
FIG. 8 is another schematic flowchart of a communication method according to an embodiment of this application;
FIG. 9 is a diagram of a possible structure of a communication apparatus according to an embodiment of this application; and
FIG. 10 is a diagram of a possible structure of a communication apparatus according to an embodiment of this application.

### DESCRIPTION OF EMBODIMENTS

The following further describes specific embodiments of this application in detail with reference to the accompanying drawings.

Terms "first", "second", and the like in this specification, the claims, and the accompanying drawings of this application are used to distinguish between different objects, but are not used to describe a specific sequence. In addition, terms "including" and "having" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification means that specific features, structures, or characteristics described with reference to embodiments may be included in at least one embodiment of this application. The phrase shown in various locations in this specification may not necessarily mean a same embodiment, and is not an independent or optional embodiment exclusive from another embodiment. A person skilled in the art explicitly and implicitly understands that embodiments described in this specification may be combined with other embodiments.

In this application, "at least one (item)" means one or more, "a plurality of' means two or more, "at least two (items)" means two or three or more, and "and/or" is used to describe an association relationship between associated objects, and indicates that three relationships may exist. For example, "A and/or B" may indicate the following three cases: Only A exists, only B exists, and both A and B exist, where A and B may be singular or plural. A character "/" generally indicates an "or" relationship between the associated objects. In addition, "at least one of the following items (pieces)" or a similar expression thereof means any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

To better understand embodiments of this application, the following first describes a system architecture in embodiments of this application.

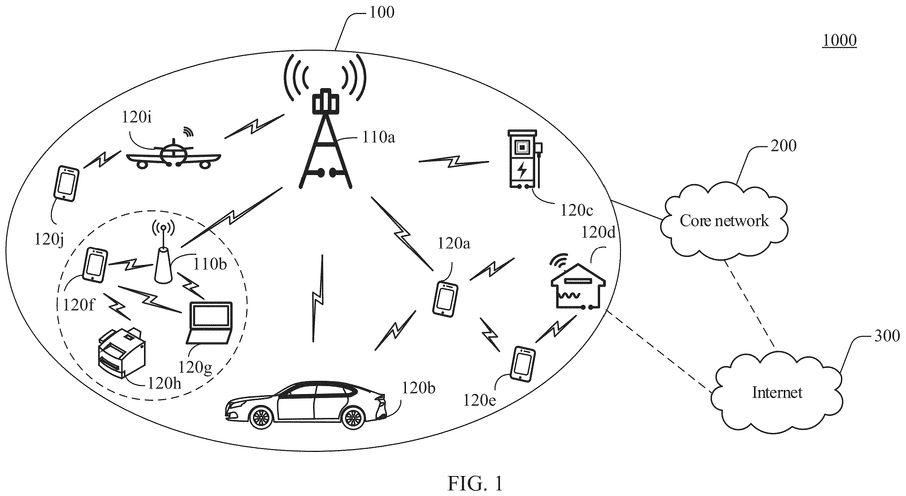

FIG. 1 is a diagram of an architecture of a communication system to which an embodiment of this application is applied. As shown in FIG. 1, a communication system 1000 includes a (radio) access network ((radio) access network, (R)AN) 100 and a core network (core network, CN) 200. Optionally, the communication system 1000 may further include an internet 300. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a cellular system related to the 3rd Generation Partnership Project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may be referred to as an access network device, a RAN entity, an access node, or the like, and forms a part of the communication system, to help the terminal implement radio access. A plurality of RAN nodes 110 in the communication system 1000 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. The RAN node 110 and the terminal 120 are both sometimes referred to as communication apparatuses. For example, the base stations 110a and 110b in FIG. 1 may be understood as communication apparatuses having a base station function, and the terminals 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or some functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or some functions of the RAN node.

In another possible scenario, a plurality of RAN nodes collaborate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as an example for description in this application. Any one of the CU (or the CU-CP and the CU-UP), the DU, and the RU in this application may be implemented by using a software module, a hardware module, or a combination of a software module and a hardware module.

The terminal may be referred to as a terminal device, user equipment (user equipment, UE), a mobile station, a mobile terminal, mobile equipment (mobile equipment, ME), an access terminal, a subscriber unit, a subscriber station, a mobile station, a remote station, a remote terminal, a user terminal, a wireless communication device, a user agent, a user apparatus, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. Optionally, the terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a terminal device in a 5G network, a terminal device in a future evolved public land mobile network (public land mobile network, PLMN) or a non-terrestrial network (non-terrestrial networks, NTN), or the like, or may be an end device, a logical entity, an intelligent device, such as a terminal device like a mobile phone or an intelligent terminal, or a communication device such as a server, a gateway, a base station, or a controller.

The core network may include one or more function entities (or referred to as a function network element, a function, a network element, an entity, a core network device, a device, or the like), for example, a network slice selection function (network slice selection function, NSSF), a network exposure function (network exposure function, NEF), a network repository function (network function repository function, NRF), a policy control function (policy control function, PCF), a unified data management (unified data management, UDM), an access and mobility management function (access and mobility management function, AMF), an authentication service function/authentication server function (authentication server function, AUSF), a session management function (session management function, SMF), a user data repository (user data repository, UDR), a user plane function (user plane function, UPF), and a tag management function (tag management function, TMF).

Optionally, the communication system 1000 may include a server, for example, a service requester, that is, a server or an application function (application function, AF) that delivers an instruction, which may alternatively be referred to as an operation requester, a third party, or the like.

The following describes a function of each device:
The access and mobility management function (which may be referred to as an access and mobility management device, an access and mobility management function entity, an access and mobility management function network element, a mobility management device, an access management device, a mobility management network element, a mobility management entity, an AMF, or the like) is a type of core network device. The device may be configured to manage user equipment access control and mobility. During actual application, the device includes an access and mobility management function in a mobility management entity (mobility management entity, MME) in a long term evolution (long term evolution, LTE) network framework and is added with an access management function, and may be specifically responsible for user equipment registration, mobility management, a tracking area update procedure, reachability detection, session management network element selection, mobility state conversion management, and the like. For example, in 5G, the access and mobility management network element may be an AMF network element. In future communication, for example, in 6G, the access and mobility management network element may still be an AMF network element, or may have another name. This is not limited in this application. When the access and mobility management network element is an AMF network element, the AMF may provide an Namf service.

The tag management function (which may be referred to as a tag management device, an internet of things management function (IoT management function, IMF), an internet of things terminal management function, an ambient power-obtained internet of things terminal management function (ambient iot management function, AITMF), an ambient power-obtained internet of things management device, an ambient power-enabled internet of things function (ambient IoT function, AIoTF), an ambient power-enabled internet of things terminal management function, an ambient power-enabled internet of things management function, a TMF, or the like) is configured to perform management of an internet of things terminal (or referred to as an ambient power-obtained internet of things terminal Ambient IoT), internet of things terminal data processing, internet of things terminal data routing, and the like. The tag management function may parse an instruction from a service requester (or an application function), determine, based on the instructions, a reader for executing the instruction, and indicate the reader to perform an operation of an internet of things terminal or indicate the reader to perform a random access procedure of an internet of things terminal; and receive data from the internet of things terminal via the reader, and optionally perform data processing of the internet of things terminal, and send data of the internet of things terminal to the service requester.

The user plane function (which may be referred to as a user plane device, a UPF, or the like) is a type of core network device. The device may be responsible for forwarding and receiving user data in user equipment. The user plane function network element may receive user data from a data network, and transmit the data to the user equipment via an access network element; and may further receive user data from the user equipment via the access network element, and forward the data to the data network. A transmission resource and a scheduling function that are used by the user plane function network element to provide a service for the user equipment are managed and controlled by the session management function network element.

The session management function (which may be referred to as a session management device, an SMF, or the like) is a type of core network device. The device may be configured to be responsible for user equipment session management (including session establishment, modification, and release), selection and reselection of a user plane function network element, user equipment internet protocol (internet protocol, IP) address allocation, quality of service (quality of service, QoS) control, and the like. For example, in 5G, the session management network element may be a session management function (session management function, SMF) network element. In a future communication system, for example, in 6G, the session management network element may still be an SMF network element, or may have another name. This is not limited in this application. When the session management network element is an SMF network element, the SMF may provide an Nsmf service.

The authentication server function (which may be referred to as an authentication server network element, an authentication server device, an AUSF, or the like) is configured to perform authentication, that is, authentication between UE and an operator network. After receiving an authentication request initiated by a subscriber, the authentication server function network element may perform authentication and/or authorization on the subscriber by using authentication information and/or authorization information stored in the unified data management network element, or generate authentication information and/or authorization information of the subscriber by using the unified data management network element. The authentication server function network element may feed back the authentication information and/or the authorization information to the subscriber.

In a possible implementation, the authentication server function network element may alternatively be integrated with the unified data management network element. In a 5G communication system, the authentication server function network element may be an authentication server function (authentication server function, AUSF) network element. In a future communication system, the unified data management may still be an AUSF, or may have another name. This is not limited in embodiments of this application.

The unified data management function may be referred to as a unified data management device, a unified data management network element, a data management device, a unified data management entity, a UDM, or the like. The unified data management network element is configured for terminal device identification handling, access authentication, registration, mobility management, and the like. In a 5G communication system, the unified data management may be a UDM or a unified data management device. In a future communication system, the unified data management may still be a UDM network element, or may have another name. This is not limited in embodiments of this application. The unified data management device may be a core network device. The unified data management device may be a control plane device.

The user data repository function (which may be referred to as a user data repository device, a user data repository entity, a user data repository network element, a user data storage device, a UDR, or the like) may be understood as a name of a unified data storage network element in a 5G architecture. The user data repository mainly includes the following functions: storage and retrieval of subscription data, policy data, application data, and other types of data.

The network exposure function (network exposure function, NEF) (which may be referred to as a network exposure device, a network exposure function entity, a network exposure function network element, a network capability exposure function entity, a network capability exposure function device, a network capability exposure function network element, a network capability exposure device, or the like) is mainly configured to support exposure of capabilities and events, for example, is configured to securely expose, to the outside, services and capabilities provided by 3GPP network functions.

The policy control function (policy control function, PCF) (which may be referred to as a policy control network element, a policy control function network element, a policy control device, a policy control function entity, or the like) is mainly responsible for providing a unified policy framework to govern network behavior, providing policy rules to a control plane function, accessing subscription information relevant for policy decisions, and the like.

The operation requester (or referred to as a service requester or a third party) may be a server or an application function. In embodiments of this application, the operation requester may be understood as a device that sends an operation instruction. For example, the operation requester may be a server (server), an A-IoT server, an application function (application function, AF), or another device that sends an operation instruction. The operation requester may correspond to a specific type of user. The specific type of user may include an enterprise, a tenant, a third party, or a company. This is not limited. That the operation requester corresponds to the specific type of user may be understood as that the operation requester belongs to the specific type of user and is managed by the specific type of user.

The reader (reader) interacts with an internet of things terminal through a radio frequency signal or a wireless signal. In this application, an example in which the internet of things terminal (or referred to as an internet of things device, an internet-of-things terminal, or the like) is a tag is used for description. However, in this application, a device form of the internet of things terminal is not limited to the tag. This is true in this specification. It should be understood that a name of the reader is not limited in this application. The reader may alternatively be named a reader/writer or another name, that is, it may be understood that names of the reader and the reader/writer are interchangeable. The reader herein has a function related to the reader in this application. For example, the reader has a function of performing an operation described in this application on the internet of things terminal (for example, the tag) (such as tag information obtaining, an inventory operation, a read operation, a write operation, an invalidation operation, or an operation of message interaction with the tag), and has functions of obtaining charging-related information and/or charging information and sending charging information to a CHF. In a possible implementation, the reader may send an instruction (for example, send an instruction of the server or the application function, or an instruction of the core network device) to the internet of things terminal (for example, the tag), or the reader may send information from the internet of things terminal (for example, the tag) to the core network device, the server, or the application function. In a possible implementation, the reader may obtain, based on an instruction delivered by the core network device or the server, information stored in a specified internet of things terminal (for example, a tag). For example, if an inventory operation (which may alternatively be referred to as a stocktaking operation) is performed, the reader obtains identification information of the tag, where the identification information may be a unique identifier of the tag or a temporary identifier of the tag. For example, if a read operation is performed, the reader reads data in a storage area of the tag. Optionally, in some scenarios in which information stored in the tag needs to be rewritten, the reader may further have a write function. If a write operation is performed, the reader writes data into the storage area of the tag. In addition, the reader may further perform an invalidation operation on the tag. After the invalidation operation is performed, the tag is invalidated, and an operation like tag information obtaining, an inventory operation, a read operation, an operation of message exchange with the tag, or a write operation cannot be performed. In a possible implementation, that the tag is invalidated and tag information obtaining cannot be performed may be understood as that the reader cannot obtain tag information of the invalidated tag after the tag is invalidated. In another possible implementation, that the tag is invalidated and an operation of message exchange with the tag cannot be performed may be understood as that the reader cannot perform message exchange with the invalidated tag after the tag is invalidated. In this application, the reader may be a terminal device such as UE, or may be an access network device, a pole station, an eNodeB, a gNodeB, an integrated access and backhaul (integrated access and backhaul, IAB) node, or the like. A form of the reader is not limited in this application.

The policy control function (which may also be referred to as a policy control device, a PCF, or the like) is mainly responsible for providing a unified policy framework to govern network behavior, providing policy rules to a control plane function, accessing subscription information relevant for policy decisions, and the like. It should be noted that these functional units may operate independently, or may be combined to implement some control functions, for example, access control and mobility management functions such as access authentication, security encryption, and location registration of a terminal device, and session management functions such as establishment, release, and change of a user plane transmission path.

It should be noted that the core network device in this application may perform a procedure related to an internet of things service, for example, tag access management, security authentication, instruction transmission, and internet of things terminal (for example, tag) management. In a possible implementation, internet of things terminal (for example, tag) management is performed by using an enhanced access management device (for example, an AMF). In another possible implementation, internet of things terminal (for example, tag) management is performed by using a newly added function (for example, a TMF, an AITMF, or an AIoTF), and the function can be connected to an access network device. This is equivalent to that the access network device has an interface to the function. Alternatively, the function may be connected to an access network device via an AMF. In this case, a topology location in a network is equivalent to an existing SMF or PCF. In terms of deployment, the newly added function (such as the TMF, the AITMF, or the AIoTF) may be co-deployed with the AMF.

It should be noted that the foregoing function entity is only a name, and the name does not constitute a limitation on the entity. Unless otherwise specified, different description manners may be replaced with each other. For example, the session management function may be replaced with a "session management function entity" or another name, and the session management function entity may correspond to an entity that includes another function in addition to the session management function. For another example, the user plane function may be replaced with a "user plane function entity" or another name, and the user plane function entity may correspond to an entity that includes another function in addition to the user plane function. Unified descriptions are provided herein, and details are not described again below.

It should be noted that, during actual deployment, different functions or network elements may be integrated. For example, the access and mobility management network element may be integrated with the session management network element, and the session management network element may be integrated with the user plane network element. When two network elements are integrated, interaction between the two network elements provided in embodiments of this application becomes an internal operation of the integrated network element or may be omitted.

It should be noted that a name of a message between network elements, a name of each parameter in the message, and the like in the following embodiments of this application are merely examples. There may alternatively be other names during specific implementation. This is not specifically limited in embodiments of this application.

In this application, "sending information to ... (a terminal)" may be understood as that a destination end of the information is the terminal, and may include directly or indirectly sending the information to the terminal; and "receiving information from ... (a terminal)" or "receiving information that is from ... (a terminal)" may be understood as that a source end of the information is the terminal, and may include directly or indirectly receiving the information from the terminal. Information may undergo necessary processing, for example, a format change, between a source end and a destination end of information sending. However, the destination end may understand valid information from the source end. A similar expression in this application may be understood similarly, and details are not described herein again.

The following explains and describes related technical features in embodiments of this application. It should be noted that these explanations are intended to make embodiments of this application easier to understand, but should not be considered as a limitation on the protection scope claimed in this application.

### 1. Ambient power-enabled internet of things (ambient IoT power-enabled-loT, Ambient IoT or A-IoT)

The A-IoT is also referred to as the ambient power-obtained internet of things or the passive internet of things (passive IoT, P-IoT), that is, some network nodes may be passive (passive), semi-passive (semi-passive), semi-active (semi-active), or active (active). Passive and semi-passive terminals may communicate via a reflected carrier, that is, the passive and semi-passive terminals need to rely on an external carrier source for communication. The passive terminal may have or may not have an energy storage capacitor. If the passive terminal has an energy storage capacitor, the passive terminal needs to rely on an external environment to obtain energy for communication, for example, radio frequency energy. The semi-passive terminal may have a power amplifier, so that a communication distance is longer than that of the passive terminal. The semi-passive terminal usually has an energy storage capacitor, and may store energy such as solar energy and radio energy in an environment in the capacitor. An active terminal (active device) may actively generate a carrier (or may be understood as having a carrier recovery capability), and may perform communication without relying on an external carrier source, and therefore may have an active communication capability. In a possible implementation, the active terminal may also have an energy storage capacitor, and may obtain energy in a manner of solar energy, radio frequency energy, wind energy, water energy, tidal energy, or the like. An energy obtaining manner is not limited. These nodes are not equipped with or do not depend on power supply devices such as batteries, but obtain energy from an environment, to support data sensing, transmission, and distributed computing. The nodes may further store the obtained energy. An architecture of the ambient power-enabled internet of things may include internet of things terminals (such as passive, semi-passive, semi-active, and active terminals), a reader (reader), and a server, and optionally may further include a core network device. The internet of things terminal may be in a tag form, or may be in any other terminal form. This is not limited. The reader may be an access network device, for example, a base station, a pole station, a micro base station, a macro base station, a relay point (for example, an integrated access and backhaul node IAB node), or a mobile base station. The reader may alternatively be a terminal device, for example, a mobile phone, an IoT device, or a handheld reader/writer.

### 2. Terminal device serving as a reader

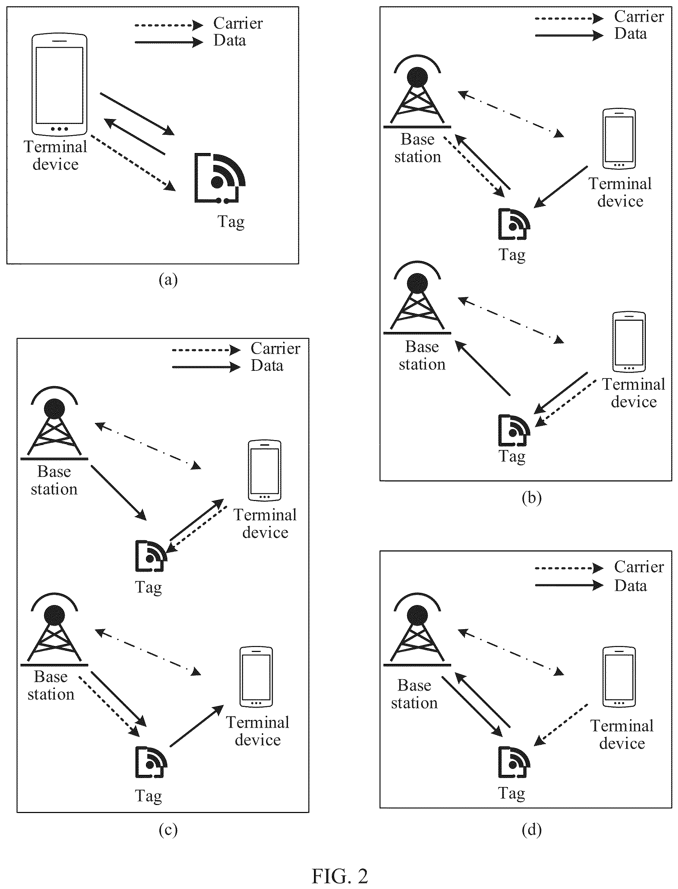

In the ambient IoT, when the terminal device serves as a reader, reader roles that can be executed by the terminal device mainly include the following four types: 1. reader (the reader in this application is a reader that integrates functions of an assisted reader, a downlink assisted reader, an uplink assisted reader, and a carrier assisted reader, that is, a functionally integrated reader); 2. downlink assisted reader; 3. uplink assisted reader; 4. carrier assisted reader; and 5. assisted reader. In a possible implementation, the downlink assisted reader and the uplink assisted reader may be collectively referred to as an assisted reader. Optionally, with development of communication technologies, there may be other types of reader roles subsequently. This is not limited herein. The following describes five types of readers in detail based on FIG. 2.

In this application, a reader role may be understood as or replaced with a reader function or a reader type. Executing a reader role may be replaced by performing a reader function or serving as a reader.

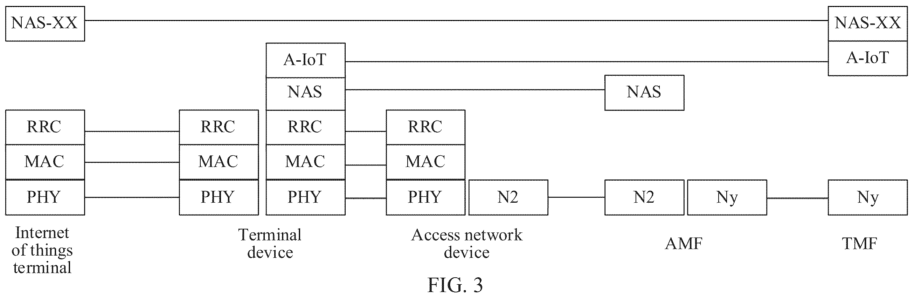

For example, a terminal device shown in (a) in FIG. 2 executes a role of a functionally integrated reader, and may directly communicate with an internet of things terminal (that is, a tag in (a) in FIG. 2). In this architecture, the terminal device needs to have a protocol stack (for example, radio resource control (radio resource control, RRC), medium access control (medium access control, MAC), or physical (physical, PHY)) for communication with the internet of things terminal, as shown in FIG. 3. In addition, as a reader, the terminal device also needs to communicate with a core network device such as an AMF or a TMF (for example, by using a non-access stratum (non-access stratum, NAS) or an A-IoT instruction), so that the terminal device can interact with the internet of things terminal to send downlink data or obtain uplink data based on an instruction of the core network device. In this architecture, although an access network device (for example, a base station) does not need to directly communicate with the internet of things terminal, a radio resource for communication between the terminal device and the internet of things terminal is controlled and scheduled by the base station.

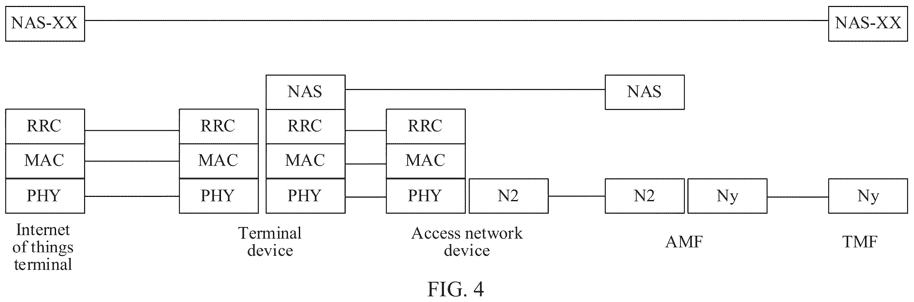

A terminal device shown in (b) in FIG. 2 executes a role of a downlink assisted reader, and may assist downlink communication of an internet of things terminal (that is, a tag in (b) in FIG. 2). In this architecture, the terminal device needs to have a protocol stack (RRC, MAC, or PHY) for communication with the internet of things terminal, as shown in FIG. 4. The protocol stack is consistent with the protocol stack for communication between the terminal device and the internet of things terminal in FIG. 3, and a difference lies only in whether communication between the terminal device and a network can directly connect to a core network device (for example, an AMF/TMF in FIG. 3) to perform internet of things service transmission (for example, support identification of an A-IoT instruction) or relay uplink and downlink data under control of an access network device (for example, a base station). Therefore, a difference between (b) in FIG. 2 and (a) in FIG. 2 lies in that the terminal device is only responsible for relaying downlink data of the internet of things terminal; and the internet of things terminal may directly send uplink data to the base station. This architecture is usually applicable to a scenario in which when downlink quality of an internet of things terminal is poor and the internet of things terminal cannot successfully receive downlink data directly via a base station, the base station may first send downlink data of the internet of things terminal to a terminal device, and the terminal device forwards the downlink data to the internet of things terminal at a relatively short distance, thereby ensuring downlink transmission quality. Therefore, whether the terminal device is required to assist in downlink data forwarding may be determined by the base station based on quality of current communication with the internet of things terminal. The core network device does not need to participate in determining a transmission path. In this architecture, communication between the terminal device and the internet of things terminal is triggered by the base station, and a radio resource for communication is controlled and scheduled by the base station.

A terminal device shown in (c) in FIG. 2 executes a role of an uplink assisted reader, and may assist uplink communication of an internet of things terminal (that is, a tag in (c) in FIG. 2). A difference between (c) in FIG. 2 and (b) in FIG. 2 lies only in that one assists in downlink communication and the other assists in uplink communication. Scenarios applicable to (c) in FIG. 2 and (b) in FIG. 2 are opposite. When uplink quality of an internet of things terminal is poor and the internet of things terminal cannot successfully send uplink data to a base station directly via an access network device (for example, a base station), the uplink data of the internet of things terminal may be first sent to a terminal device at a relatively short distance, and the terminal device forwards the uplink data to the base station, thereby ensuring uplink transmission quality. In this architecture, a communication protocol stack that needs to be supported by the terminal device, mechanisms for communication of the terminal device with the base station and the core network, and the like are all consistent with those in (b) in FIG. 2. Details are not described herein again.

A terminal device shown in (d) in FIG. 2 executes a role of a carrier assisted reader, may only assist in providing a carrier for an internet of things terminal (that is, a tag in (d) in FIG. 2), and does not need to participate in forwarding uplink data or downlink data. In this case, the terminal device does not need to support a special communication protocol (that is, the terminal device may not need to support an RRC protocol, a MAC protocol, or a PHY protocol for communication with the internet of things terminal), and only needs to support sending of a carrier on a specific frequency band (that is, as long as the terminal supports communication on a specific frequency band, the terminal device needs to provide a carrier in this architecture).

### 3. Cell selection

Before initiating a registration procedure to access a network, a terminal device needs to perform network selection and cell selection. The terminal device selects a specific PLMN based on resource configuration information (for example, a network selection list), and performs cell selection according to a cell selection criterion. For example, the terminal device performs measurement (for example, signal quality measurement) required for cell selection, detects and synchronizes a broadcast channel, and receives and processes a broadcast message. For example, a cell broadcasts one or more PLMN IDs in a system message, and the terminal device determines an appropriate cell based on the network selection list, signal quality, and the like.

### 4. Cell supporting an internet of things service

The cell supporting the internet of things service (or an ambient power-enabled internet of things service, or an ambient power-obtained internet of things service) may be an independent logical cell or a non-independent logical cell, that is, the internet of things service and a cellular service share a logical cell. One access network device may have one or more cells. The one or more cells may all support the internet of things service; or none of the one or more cells supports the internet of things service; or some of the one or more cells support the internet of things service, and some cells do not support the internet of things service.

It should be noted that, if an access network device may support a plurality of cells, some cells support the internet of things service, and some cells do not support the internet of things service, the access network device is capable of selecting, based on A-IoT indication information (for example, first indication information), a first core network device (for example, an AMF) that supports the internet of things service, and processing an RRC message, an N2 message, resource scheduling, and the like related to the internet of things service.

It should be noted that, if an access network device may support a plurality of cells, and none of the plurality of cells supports the internet of things service, the access network device is incapable of selecting, based on A-IoT indication information (for example, first indication information), a first core network device (for example, an AMF) that supports the internet of things service, and processing an RRC message, an N2 message, resource scheduling, and the like related to the internet of things service.

It should be noted that the N2 message may be understood as a next generation application protocol (next generation application protocol, NGAP) message.

### 5. AN message (AN meg)

In a registration process, the AN message may include an AN parameter and a NAS message (for example, a registration request). An access network device may parse an AN parameter and forward a NAS registration message.

In this application, an example in which an internet of things terminal (or referred to as an internet of things device, an internet-of-things terminal, or the like) is a tag is used for description. However, in this application, a device form of the internet of things terminal is not limited to the tag. This is true in this specification. A reader performs contactless bidirectional data communication in a wireless radio frequency manner, and reads/writes an electronic tag or a radio frequency tag (Tag) in a wireless radio frequency manner, to identify a target and exchange data. There are two operating modes. One is that when entering an effective identification range of the reader, the tag receives a radio frequency signal sent by the reader, and sends, by using energy obtained from an induced current, information stored in a chip (which corresponds to a passive tag or a semi-passive tag). The other is that the tag may store a part of electric energy through solar energy or the like and therefore can actively send a signal of a specific frequency (which may also be referred to as a semi-active tag or an active tag), and the reader receives and decodes information, and then sends decoded information to a central information system for related data processing.

The following describes in detail communication methods and communication apparatuses provided in this application.

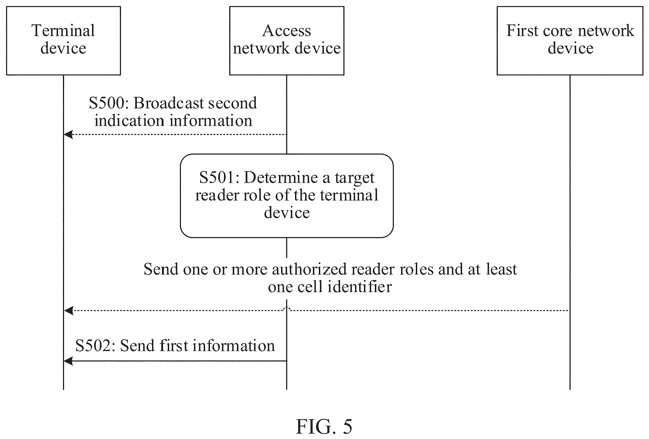

FIG. 5 is a schematic flowchart of a communication method according to an embodiment of this application. As shown in FIG. 5, the communication method includes steps S500 to S502. The method shown in FIG. 5 may be performed by a communication apparatus or a chip in the communication apparatus. Herein, the communication apparatus may be specifically an access network device, a terminal device, or a first core network device. For example, the first core network device may be an AMF, a UDM, a UDR, an NEF, a PCF, an SMF, a TMF, an AIoTF, an AITMF, or an AUSF. It should be noted that FIG. 5 is a schematic flowchart of a method embodiment of this application, and shows detailed communication steps or operations of the method. However, these steps or operations are merely examples. Other operations or variations of various operations in FIG. 5 may be further performed in embodiments of this application. In addition, the steps in FIG. 5 may be separately performed in a sequence different from that shown in FIG. 5, and not all operations in FIG. 5 may need to be performed.

S501: The access network device determines a target reader role of the terminal device.

In some feasible implementations, that the access network device determines the target reader role of the terminal device may be understood as that the access network device obtains one or more authorized reader roles of the terminal device, and determines the target reader role of the terminal device from the one or more authorized reader roles. For example, the target reader role may include one or more reader roles.

It should be understood that, in an implementation, that the access network device obtains the one or more authorized reader roles of the terminal device may be understood as that the access network device determines the one or more authorized reader roles of the terminal device based on second information, where the second information includes one or more of the following information: capability information of the terminal device and/or subscription data of the terminal device, that is, the access network device may determine the one or more authorized reader roles of the terminal device based on the capability information of the terminal device, or the subscription data of the terminal device, or the capability information of the terminal device and the subscription data of the terminal device. The capability information of the terminal device indicates a reader role supported by the terminal device, and the subscription data of the terminal device indicates a reader role that the terminal device is allowed to serve as. In other words, the access network device may determine the one or more authorized reader roles of the terminal device based on the second information. Optionally, in this implementation, that is, when the access network device determines the one or more authorized reader roles of the terminal device based on the second information, the access network device may send the one or more authorized reader roles to the first core network device, so that the first core network device sends the one or more authorized reader roles to the terminal device, and the terminal device may send a first request message to the access network device based on the received authorized reader role. It may be understood that, after the terminal device receives the one or more authorized reader roles sent by the first core network device, the terminal device may send the first request message to the access network device based on the one or more authorized reader roles. In a possible implementation, the first request message is used to request to execute a first reader role. For example, the first reader role is one or more reader roles in the one or more authorized reader roles.

For example, in the ambient IoT, the reader role that is supported by the terminal device and that is indicated by the capability information of the terminal device may be one or more of an uplink assisted reader (for example, an ambient IoT UL assisted reader), a downlink assisted (for example, ambient IoT DL assisted) reader, an assisted reader (for example, an ambient IoT assisted reader), a reader (for example, an ambient IoT reader), or a carrier assisted (ambient IoT CW assisted) reader. The uplink assisted reader and the downlink assisted reader may be collectively referred to as an assisted reader (ambient IoT assisted reader), a one-way (ambient IoT one-way) reader, a unidirectional assisted (unidirectional assisted) reader, or the like. This is not limited herein.

Optionally, in another possible implementation, capabilities of different reader roles are downward compatible. For example, a terminal device supporting a reader may support an uplink assisted reader, a downlink assisted reader, an assisted reader, and a carrier assisted reader. For another example, a terminal device supporting an assisted reader may support an uplink assisted reader and a downlink assisted reader. In other words, the reader role that is supported by the terminal device and that is indicated by the capability information of the terminal device in this application may be a reader role with a highest capability. Therefore, after the access network device obtains the capability information of the terminal device, the access network device may consider that the terminal device supports both the reader role with a highest capability that is explicitly indicated by the capability information and another role with a lower capability. In other words, the reader role that is supported by the terminal device and that is indicated by the capability information of the terminal device is not equivalent to being explicitly indicated by the capability information, and may further include another reader compatible with the terminal device.

In a possible implementation, the capability information of the terminal device may be included in (or contained in, or carried in) a NAS message (for example, a registration request (registration request)), and may be specifically carried in a UE radio capability (UE radio capability) field or a UE mobility management core network capability (UE MM Core Network Capability) field of the registration request. This manner of carrying the capability information of the terminal device described in this application by using an existing field in existing signaling facilitates forward compatibility of a protocol. It should be noted that the capability information of the terminal device is reported by the terminal device (that is, the capability information of the terminal device is from the terminal device, that is, a source end of the capability information of the terminal device is the terminal device). When the capability information of the terminal device is carried in the NAS message (for example, the registration request) and reported, the terminal device may forward/transparently transmit the registration request to the first core network device via the access network device, and after the first core network device obtains the capability information of the terminal device through parsing, the first core network device sends the capability information of the terminal device to the access network device. It may be understood that, in a registration process, the first core network device may include the capability information of the terminal device in a context request (for example, a context setup request or a context modification request) or a terminal device capability check request (UE radio capability check request), to send the capability information of the terminal device to the access network device.

In another possible implementation, after completing a registration procedure, the terminal device may send the capability information of the terminal device to the first core network device via a NAS message. The first core network device sends the capability information of the terminal device to the access network device via an N2 message (for example, a context modification request or a terminal device capability check request).

Optionally, the capability information of the terminal device may be carried in an AN parameter (for example, an AN parameter of an AN message). Therefore, after receiving the AN message or the AN parameter, the access network device may directly obtain the capability information of the terminal device through parsing, and does not need to deliver the capability information of the terminal device to the access network device via the first core network device.

The reader role that the terminal device is allowed to serve as and that is indicated by the subscription data of the terminal device may be one or more of an uplink assisted reader, a downlink assisted reader, an assisted reader, a reader, a carrier assisted reader, or the like. The subscription data may explicitly indicate the reader role that the terminal device is allowed to serve as. For example, the subscription data directly includes one or more of an uplink assisted reader, a downlink assisted reader, an assisted reader, a reader, or a carrier assisted reader. For example, the subscription data may include one or more information elements of a reader role (for example, reader role), a reader type (reader type), or a reader capability (reader capability), to indicate the reader that the terminal device is allowed to serve as.

Optionally, the reader role that the terminal device is allowed to serve as and that is indicated by the subscription data of the terminal device may not be equivalent to being explicitly indicated by the subscription data, and may further include another reader compatible with the terminal device. Alternatively, it is understood that the reader role that the terminal device is allowed to serve as and that is indicated by the subscription data is downward compatible. Alternatively, it is understood that the reader role that the terminal device is allowed to serve as and that is indicated by the subscription data is a reader role with a highest capability. Actually, the reader role that the terminal device is allowed to serve as may further include another role with a lower capability. For example, if the reader role that the terminal device is allowed to serve as and that is indicated by the subscription data of the terminal device is a reader, it may be determined that the reader role that the terminal device is actually allowed to serve as may include an uplink assisted reader, a downlink assisted reader, an assisted reader, and a carrier assisted reader.

Optionally, the subscription data may indicate, in a manner of indicating a slice and/or a data network name (data network name, DNN), the reader role that the terminal device is allowed to serve as. This is not limited herein. A manner such as a field, a format, coding, or construction indicating the reader role that the terminal device is allowed to serve as in the subscription data is not limited in this application. The subscription data of the terminal device may be stored in a second core network device. For example, the second core network device may be a UDM, a UDR, an NEF, a PCF, an SMF, a TMF, an AIoTF, an AITMF, or an AUSF. The first core network device may obtain the subscription data of the terminal device from the second core network device, and send the subscription data of the terminal device to the access network device.

In another implementation, that the access network device obtains the one or more authorized reader roles of the terminal device may be understood as that the access network device receives the one or more authorized reader roles of the terminal device from the first core network device. In other words, the one or more authorized reader roles are determined by the first core network device and sent to the access network device. It may be understood that, when the one or more authorized reader roles are determined by the first core network device, the first core network device may specifically determine the one or more authorized reader roles based on capability information of the terminal device, or subscription data of the terminal device, or the capability information of the terminal device and the subscription data of the terminal device. Generally, in this implementation, the first core network does not need to send the subscription data of the terminal device to the access network device.

For example, the first core network device determines the one or more authorized reader roles of the terminal device based on the capability information of the terminal device. Assuming that the capability information of the terminal device indicates that a reader role supported by the terminal device is an uplink assisted reader and a carrier assisted reader, the first core network device may determine that an authorized reader role of the terminal device is an uplink assisted reader and a carrier assisted reader.

In a possible implementation, capabilities of different reader roles are downward compatible. For example, a terminal device supporting a reader may support an uplink assisted reader, a downlink assisted reader, an assisted reader, and a carrier assisted reader. For another example, a terminal device supporting an assisted reader may support an uplink assisted reader and a downlink assisted reader. In other words, the reader role that is supported by the terminal device and that is indicated by the capability information of the terminal device in this application may be a reader role with a highest capability. Therefore, after the first core network device obtains the capability information of the terminal device, the first core network device may consider that the terminal device supports both the reader role with a highest capability that is explicitly indicated by the capability information and another role with a lower capability. In other words, the reader role that is supported by the terminal device and that is indicated by the capability information of the terminal device is not equivalent to being explicitly indicated by the capability information, and may further include another reader compatible with the terminal device.

For example, the first core network device determines the one or more authorized reader roles of the terminal device based on the capability information of the terminal device. Assuming that the capability information of the terminal device indicates that a reader role supported by the terminal device is a reader, the first core network device may determine that an authorized reader role of the terminal device is a reader, an assisted reader, or a carrier assisted reader. The assisted reader may include an uplink assisted reader and a downlink assisted reader.

For example, the first core network device determines the one or more authorized reader roles of the terminal device based on the subscription data of the terminal device. Assuming that the subscription data of the terminal device indicates that a reader role that the terminal device is allowed to serve as is an uplink assisted reader and a downlink assisted reader, the first core network device may determine that an authorized reader role of the terminal device is an uplink assisted reader and a downlink assisted reader.

In a possible implementation, the reader role that the terminal device is allowed to serve as and that is indicated by the subscription data of the terminal device may not be equivalent to being explicitly indicated by the subscription data, and may further include another reader compatible with the terminal device.

For example, the first core network device determines the one or more authorized reader roles of the terminal device based on the subscription data of the terminal device. Assuming that the subscription data of the terminal device indicates that a reader role that the terminal device is allowed to serve as is a reader, the first core network device may determine that an authorized reader role of the terminal device includes a reader, an assisted reader, or a carrier assisted reader. The assisted reader may include an uplink assisted reader and a downlink assisted reader.

For example, the first core network device determines the one or more authorized reader roles based on the capability information of the terminal device and the subscription data of the terminal device. Assuming that the capability information of the terminal device indicates that a reader role supported by the terminal device is an uplink assisted reader and a carrier assisted reader, and the subscription data of the terminal device indicates that a reader role that the terminal device is allowed to serve as is an uplink assisted reader and a downlink assisted reader, the first core network device may determine that an authorized reader role of the terminal device is an uplink assisted reader.

Optionally, when the first core network device determines an authorized reader role, the first core network device may send the authorized reader role determined by the first core network device to the terminal device, so that the terminal device can send the first request message to the access network device based on the authorized reader role.

It should be understood that, that the access network device determines the target reader role of the terminal device from the one or more authorized reader roles may be understood as that the access network device obtains third information, and determines the target reader role from the one or more authorized reader roles based on the third information. The third information includes one or more of the following information: the capability information of the terminal device, the first request message from the terminal device, a status of a link between the access network device and an internet of things terminal device, or a radio resource status of the access network device. The first request message is used to request to serve as the first reader role. Generally, the first reader role that the terminal device requests to serve as may be an uplink assisted reader, a downlink assisted reader, an assisted reader, a reader, a carrier assisted reader, or the like. The status of the link between the access network device and the internet of things terminal (for example, a tag) includes a packet loss rate, a delay, a jitter, a congestion status, an uplink budget, a downlink budget, and other information. The radio resource status of the access network device includes radio resource utilization, a no-load rate, spectrum efficiency, spectrum utilization, and other information.

In an example, when the third information is the capability information of the terminal device, the access network device may determine, as the target reader role, the reader role that is supported by the terminal device and that is indicated by the capability information of the terminal device in the one or more authorized reader roles. For example, assuming that the one or more authorized reader roles include an uplink assisted reader and a downlink assisted reader, and the capability information of the terminal device indicates that the reader role supported by the terminal device is an uplink assisted reader, the access network device may determine that the target reader role is an uplink assisted reader. For another example, assuming that the one or more authorized reader roles include an uplink assisted reader, a downlink assisted reader, and a carrier assisted reader, and the capability information of the terminal device indicates that the reader role supported by the terminal device is an uplink assisted reader and a carrier assisted reader, the access network device may determine that the target reader role is an uplink assisted reader and a carrier assisted reader.

In another example, when the third information is the first request message from the terminal device, the access network device may determine the first reader role in the one or more authorized reader roles as the target reader role. For example, assuming that the one or more authorized reader roles include an uplink assisted reader and a downlink assisted reader, and the first reader role requested by the first request message is a downlink assisted reader, the access network device may determine that the target reader role is a downlink assisted reader.

In still another example, when the third information is the status of the link between the access network device and the internet of things terminal, for example, an uplink packet loss rate and a downlink packet loss rate, if the uplink packet loss rate between the access network device and the internet of things terminal is greater than the downlink packet loss rate, and the one or more authorized reader roles include an uplink assisted reader, it is determined that the target reader role is an uplink assisted reader; or if the downlink packet loss rate between the access network device and the internet of things terminal is greater than the uplink packet loss rate, and the one or more authorized reader roles include a downlink assisted reader, it is determined that the target reader role is a downlink assisted reader.

In still another example, when the third information is the status of the link between the access network device and the internet of things terminal, for example, an uplink budget and a downlink budget, if the uplink budget between the access network device and the internet of things terminal is less than the downlink budget, and the one or more authorized reader roles include an uplink assisted reader, it is determined that the target reader role is an uplink assisted reader; or if the downlink budget between the access network device and the internet of things terminal is less than the uplink budget, and the one or more authorized reader roles include a downlink assisted reader, it is determined that the target reader role is a downlink assisted reader.

Optionally, in some feasible implementations, that the access network device determines the target reader role of the terminal device may alternatively be understood as that the access network device obtains fourth information, and determines the target reader role of the terminal device based on the fourth information. In other words, the access network device may directly determine the target reader role based on the fourth information. The fourth information includes one or more of the following information: capability information of the terminal device, subscription data of the terminal device, a first request message from the terminal device, a status of a link between the access network device and an internet of things terminal device, a radio resource status of the access network device, or the like. For understandings of the capability information of the terminal device, the subscription data of the terminal device, the status of the link between the access network device and the internet of things terminal device, and the radio resource status of the access network device, refer to the foregoing related descriptions. Details are not described herein again.

S502: The access network device sends first information to the terminal device. Correspondingly, the terminal device receives the first information from the access network device.

The first information indicates the terminal device to execute the target reader role. Optionally, after the terminal device receives the first information, the terminal device may send fifth information to the access network device, where the fifth information indicates whether the terminal device accepts execution of the target reader role.

Optionally, in addition to sending the first information to the terminal device, the access network device may further send resource configuration information to the terminal device, where the resource configuration information indicates/includes one or more of the following information: frequency information, frequency band information, a transmit power, a transmission bandwidth, a transmission rate, execution duration, or the like. The resource configuration information is used by the terminal device to execute the target reader role.

It should be understood that the first information and the resource configuration information may be carried in a same message, or the first information and the resource configuration information may be carried in different messages. Optionally, the first information may alternatively be carried in the resource configuration information. In other words, in addition to one or more of the frequency information, the frequency band information, the transmit power, the transmission bandwidth, the transmission rate, the execution duration, or the like, the resource configuration information may further indicate/include the first information.

In a possible implementation, the access network device may send the first information and/or the resource configuration information to the terminal device in the registration process.

As described in S501, in or after the registration process, the first core network device may send the one or more authorized reader roles to the terminal device. Therefore, the terminal device may send the first request message to the access network device based on the one or more authorized reader roles. Optionally, in or after the registration process, the first core network device may further send at least one cell identifier to the terminal device. A cell corresponding to the at least one cell identifier is a cell that supports an internet of things service (or a cell that supports an ambient power-obtained or ambient power-enabled internet of things service), one cell identifier identifies one cell, and the cell corresponding to the at least one cell identifier includes a first cell. The at least one cell identifier is used for cell handover/reselection. The one or more authorized reader roles and the at least one cell identifier may be carried in a same message, for example, a registration accept (registration accept) message or a downlink NAS message. For example, the at least one cell identifier may be specifically a cell list, and the cell list includes at least one cell that supports the internet of things service.

In this application, the internet of things may include the ambient power-obtained internet of things, the ambient power-enabled internet of things, the passive internet of things, or the like. This is not limited herein.

In this application, the internet of things service may include or be replaced with an ambient power-obtained internet of things service, an ambient power-enabled internet of things service, a passive internet of things service, or the like. This is not limited herein.

In this application, supporting an internet of things service may be understood as supporting internet of things service management, supporting internet of things terminal management, or the like.

It may be understood that step S501 and step S502 may be performed in or after the registration procedure. It should be understood that, before the terminal device initiates the registration procedure, the terminal device usually needs to perform network selection and cell selection. Therefore, before the registration procedure is initiated, step S500 may be further included:
S500: The access network device broadcasts second indication information. Correspondingly, the terminal device receives the second indication information from the access network device. Step S500 is an optional step.

The second indication information indicates that the first cell supports the internet of things service (or indicates that the first cell supports the ambient power-obtained internet of things service), or the second indication information indicates that one or more cells in the access network device support the internet of things service (or the ambient power-obtained internet of things service), and the one or more cells include the first cell.

For example, the second indication information may be specifically carried in a broadcast message (for example, a system information broadcast (system information broadcast, SIB) message). In an implementation, the terminal device may trigger/enable/activate/decide/determine to serve as a reader based on an operation performed by a user on a terminal interface. Therefore, when the terminal device determines to serve as a reader, the terminal device may select, based on the second indication information, to access a cell (for example, the first cell) that supports the internet of things service.

Optionally, in the registration process, if a cell (for example, the first cell) currently accessed by the terminal device is a cell that supports the internet of things service, the access network device may select, based on the first cell accessed by the terminal device, a first core network device that supports internet of things service management.

Optionally, in the registration process, if a cell (for example, a second cell) currently accessed by the terminal device is a cell that does not support the internet of things service, the access network device may select, based on the first indication information, a first core network device that supports the internet of things service or internet of things service management. Herein, the first indication information may be sent by the terminal device to the access network device when the registration procedure is initiated. The first indication information indicates that the terminal device supports the internet of things service, the ambient power-obtained internet of things service, and a reader function (or a reader role). For example, supporting the internet of things service may be replaced with supporting the ambient power-obtained internet of things service, requesting to obtain the internet of things service, requesting to obtain the ambient power-obtained internet of things service, requesting to serve as a reader, or the like. For example, the first indication information may be the capability information of the terminal device. In another possible implementation, the first indication information may be type information of the terminal device. The type information of the terminal device may indicate that the terminal device supports the reader function.

Optionally, if a cell accessed by the terminal device is a second cell that does not support the internet of things service in an access network device, and some cells in the access network device support the internet of things service, the access network device is capable of selecting an AMF that supports the internet of things service, and processing an RRC message, an N2 message, resource scheduling, and the like related to the internet of things service. In other words, S501 and S502 may be normally performed. After step S502, before the terminal device executes the target reader role, the terminal device may perform cell reselection or cell handover based on the at least one cell identifier sent by the first core network device, to access a cell (for example, the first cell) that supports the internet of things service. In other words, if the terminal device needs to execute the target reader role by using the cell that supports the internet of things service, the terminal device may perform cell reselection after receiving the first information sent by the access network device, to access the cell that supports the internet of things service to execute the target reader role.

Optionally, after step S502 and before the terminal device executes the target reader role, the terminal device may perform cell reselection or cell handover based on a broadcast message (for example, a SIB), to access the cell (for example, the first cell) that supports the internet of things service. In other words, if the terminal device needs to execute the target reader role by using the cell that supports the internet of things service, the terminal device may perform cell reselection after receiving the first information sent by the access network device, to access the cell that supports the internet of things service to execute the target reader role.

Optionally, if a cell accessed by the terminal device is a second cell, and none of cells in an access network device in which the second cell is located supports the internet of things service, the terminal device may perform cell reselection or cell handover based on the at least one cell identifier, to access a cell (for example, the first cell) that supports the internet of things service in another access network device. After performing cell reselection, the terminal device may initiate a handover procedure or a registration procedure (for example, a mobility registration update procedure) to a new access network device.

In this embodiment of this application, by performing the communication method, capability negotiation between a network and the terminal device can be completed, and the terminal device is enabled to execute the target reader role, to complete the internet of things service. This improves communication reliability.

The following separately describes various scenarios described in FIG. 5.

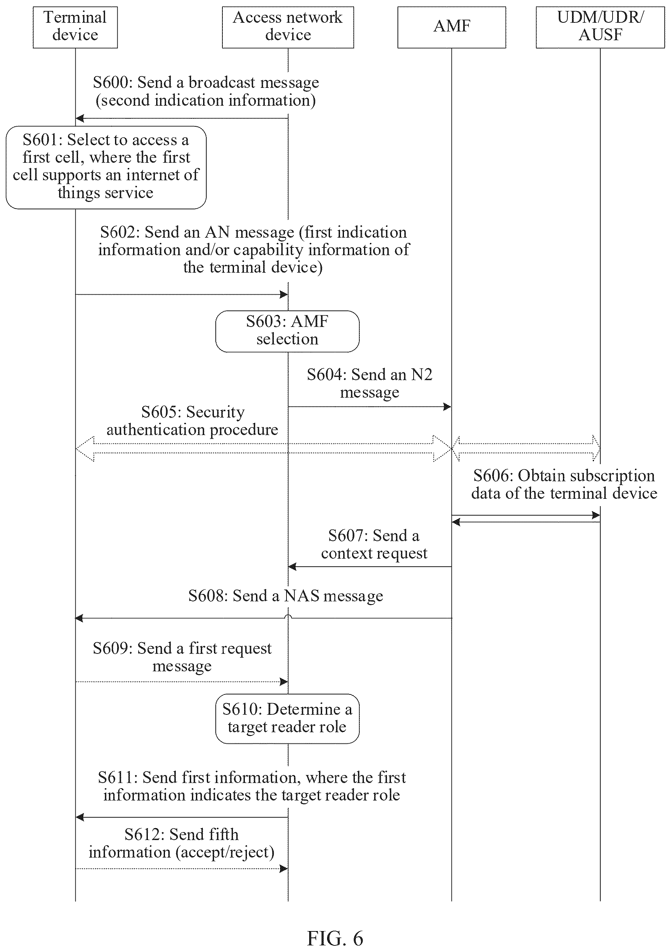

For example, FIG. 6 is another schematic flowchart of a communication method according to an embodiment of this application. In FIG. 6, an example in which a first core network device is an AMF and a second core network device is a UDM or a UDR is used for description. Details are shown in FIG. 6.

S600: An access network device sends a broadcast message. Correspondingly, a terminal device receives the broadcast message from the access network device.

The broadcast message (for example, a SIB) may include second indication information. The second indication information indicates that a first cell supports an internet of things service, or the second indication information indicates that one or more cells in the access network device support the internet of things service, and the one or more cells include the first cell, so that the terminal device accesses, based on the second indication information, the first cell that supports the internet of things service.

For more understandings of the second indication information, refer to the related descriptions in S500 in FIG. 5. Details are not described herein again.

S601: The terminal device selects to access the first cell, where the first cell is a cell that supports the internet of things service.

S602: The terminal device sends an AN message to the access network device. Correspondingly, the access network device receives the AN message from the terminal device.

The AN message includes information such as first indication information and/or capability information of the terminal device. For example, the first indication information and/or the capability information of the terminal device may be specifically carried in a NAS message (for example, a registration request) of the AN message. The first indication information indicates that the terminal device supports the internet of things service. The capability information of the terminal device indicates a reader role supported by the terminal device. For example, the capability information of the terminal device may indicate one or more of the following roles: an uplink assisted reader, a downlink assisted reader, an assisted reader, a reader, or a carrier assisted reader.

For more understandings of the first indication information and the capability information of the terminal device, refer to the related descriptions in FIG. 5. Details are not described herein again.

S603: The access network device performs AMF selection (AMF selection).

In an implementation, the access network device may select, based on the first indication information, an AMF that supports internet of things service management.

In another implementation, when the first cell accessed by the terminal device supports the internet of things service, the access network device may select, based on the first cell, an AMF that supports internet of things service management.

S604: The access network device sends an N2 message to the AMF. Correspondingly, the AMF receives the N2 message from the access network device.

The N2 message includes a NAS message (for example, a registration request).

S605: The terminal device, the AMF, an AUSF, and the UDM perform a security authentication procedure of the terminal device.

S606: The AMF interacts with the UDM/UDR to obtain subscription data of the terminal device.

Optionally, the AMF may alternatively interact with the UDR via a PCF, to obtain the subscription data of the terminal device.

The subscription data indicates a reader role that the terminal device is allowed to serve as. For example, the subscription data may indicate one or more of the following roles: an uplink assisted reader, a downlink assisted reader, an assisted reader, a reader, or a carrier assisted reader.

For more understandings of the subscription data, refer to the related descriptions in FIG. 5. Details are not described herein again.

S607: The AMF sends a context request to the access network device. Correspondingly, the access network device receives the context request from the AMF.

In an implementation, if the AMF determines an authorized reader role of the terminal device, the context request includes one or more authorized reader roles of the terminal device. For example, the AMF may determine the one or more authorized reader roles based on the subscription data of the terminal device and/or the capability information of the terminal device, and send the one or more authorized reader roles to the access network device.

In another implementation, if the access network device determines an authorized reader role of the terminal device, the context request includes the capability information of the terminal device and/or the subscription data of the terminal device. Optionally, in this implementation, the access network device may further send the authorized reader role of the terminal device that is determined by the access network device to the AMF. For example, the authorized reader role may be carried in a context response and sent to the AMF.

For example, the context request may be a context setup request or a context modification request. This is not limited herein.

For more understandings of the authorized reader role of the terminal device, refer to the related descriptions in FIG. 5. Details are not described herein again.

S608: The AMF sends a NAS message to the terminal device. Correspondingly, the terminal device receives the NAS message from the AMF.

For example, the NAS message may be a registration accept message or a registration reject message. The NAS message includes the one or more authorized reader roles of the terminal device and/or at least one piece of identification information of a cell that supports the internet of things service.

S609: The terminal device sends a first request message to the access network device. Correspondingly, the access network device receives the first request message from the terminal device.

The first request message is used to request to serve as a first reader role. For example, the first reader role may be determined by the terminal device based on the one or more authorized reader roles of the terminal device that are included in the NAS message. S609 is an optional step.

For more understandings of the first request message, refer to the related descriptions in FIG. 5. Details are not described herein again.

S610: The access network device determines a target reader role.

The access network device may determine the target reader role from the one or more authorized reader roles based on one or more of the capability information of the terminal device, the first request message, a status of a link between the access network device and an internet of things terminal, a radio resource status of the access network device, or the like. For details, refer to the related descriptions in step S501 in FIG. 5. Details are not described herein again.

For more understandings of determining the target reader role by the access network device, refer to the related descriptions of step S501 in FIG. 5. Details are not described herein again.

S611: The access network device sends first information to the terminal device. Correspondingly, the terminal device receives the first information from the access network device. The first information indicates the target reader role.

For example, the first information may be carried in an AN message. Optionally, the AN message may further include resource configuration information, and the resource configuration information includes one or more of the following information: frequency information, frequency band information, a transmit power, a transmission bandwidth, a transmission rate, execution duration, or the like. The resource configuration information may be used to execute the target reader role. In a possible implementation, the resource configuration information indicates a resource (for example, a radio resource) used when the terminal device executes the target reader role.

For more understandings of sending the first information by the access network device to the terminal device, refer to the related descriptions of step S502 in FIG. 5. Details are not described herein again.

S612: The terminal device sends fifth information to the access network device. Correspondingly, the access network device receives the fifth information from the terminal device.

The fifth information indicates whether the terminal device accepts execution of the target reader role. For example, the fifth information may be carried in an AN message. Step S612 is an optional step.

Optionally, if the terminal device accepts execution of the target reader role, the terminal device may use the resource indicated by the resource configuration information to execute a function of the target reader role. In an implementation, the terminal device may trigger/enable/activate, based on an operation performed by a user on a terminal interface, the terminal device to use the resource to execute the function of the target reader role. In another implementation, the terminal device may decide/determine to execute a reader role based on an operation performed by a user on a terminal interface, and after receiving the resource configuration information sent by the access network device, the terminal device may execute the target reader role based on the resource configuration information.

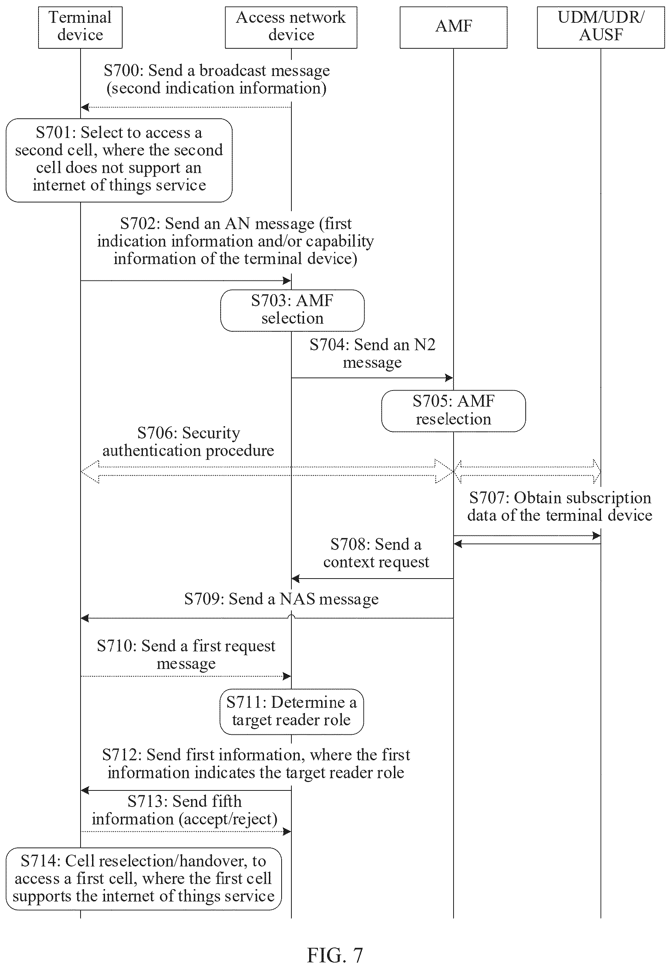

Optionally, FIG. 7 is another schematic flowchart of a communication method according to an embodiment of this application. In FIG. 7, an example in which a first core network device is an AMF and a second core network device is a UDM or a UDR is used for description. An access network device in FIG. 7 may support a plurality of cells. Some cells (for example, a first cell) support an internet of things service, and some cells (for example, a second cell) do not support the internet of things service. Therefore, the access network device is capable of selecting an AMF that supports the internet of things service, and processing an RRC message, an N2 message, resource scheduling, and the like related to the internet of things service. Details are shown in FIG. 7.

S700: The access network device sends a broadcast message. Correspondingly, a terminal device receives the broadcast message from the access network device.

The broadcast message (for example, a SIB) may include second indication information. The second indication information indicates that the first cell supports the internet of things service, or the second indication information indicates that one or more cells in the access network device support the internet of things service, and the one or more cells include the first cell. S700 is an optional step.

For more understandings of the second indication information, refer to the related descriptions in S500 in FIG. 5. Details are not described herein again.

S701: The terminal device selects to access the second cell, where the second cell is a cell that does not support the internet of things service.

S702: The terminal device sends an AN message to the access network device. Correspondingly, the access network device receives the AN message from the terminal device.

The AN message includes information such as first indication information and/or capability information of the terminal device. For example, the first indication information and/or the capability information of the terminal device may be carried in a NAS message (for example, a registration request) of the AN message. The first indication information indicates that the terminal device supports the internet of things service. The capability information of the terminal device indicates a reader role supported by the terminal device. For example, the capability information of the terminal device may indicate one or more of the following roles: an uplink assisted reader, a downlink assisted reader, an assisted reader, a reader, or a carrier assisted reader.

For more understandings of the first indication information and the capability information of the terminal device, refer to the related descriptions in FIG. 5. Details are not described herein again.

S703: The access network device performs AMF selection.

In an implementation, if the AN message in step S702 includes the first indication information, the access network device may select, based on the first indication information, an AMF that supports internet of things service management.

In another implementation, if the AN message in step S702 does not include the first indication information, an AMF that the access network device selects to access may be an AMF that does not support internet of things service management.

S704: The access network device sends an N2 message to the AMF. Correspondingly, the AMF receives the N2 message from the access network device.

The N2 message includes a NAS message (for example, a registration request).

S705: The AMF performs AMF reselection (AMF reallocation).

In a possible implementation, when the registration request (or the NAS message) sent by the terminal device includes the first indication information and/or the capability information of the terminal device, the AMF may perform AMF reselection based on the information, where a reselected AMF supports the internet of things service or internet of things service management. In other words, if the AMF selected by the access network device in step S703 is an AMF that does not support internet of things service management, AMF reselection may be performed in step S705, to select an AMF that supports the internet of things service; or if the AMF selected by the access network device in step S703 is an AMF that supports internet of things service management, step S705 herein may not be performed.

S706: The terminal device, the AMF, an AUSF, and the UDM perform a security authentication procedure of the terminal device.

S707: The AMF interacts with the UDM/UDR to obtain subscription data of the terminal device.

The subscription data indicates a reader role that the terminal device is allowed to serve as. For example, the subscription data may indicate one or more of the following roles: an uplink assisted reader, a downlink assisted reader, an assisted reader, a reader, or a carrier assisted reader.

For more understandings of the subscription data, refer to the related descriptions in FIG. 5. Details are not described herein again.

S708: The AMF sends a context request to the access network device. Correspondingly, the access network device receives the context request from the AMF.

For example, the context request may be a context setup request or a context modification request. This is not limited herein.

In an implementation, if the AMF determines an authorized reader role of the terminal device, the context request includes one or more authorized reader roles of the terminal device. For example, the AMF may determine the one or more authorized reader roles based on the subscription data of the terminal device and/or the capability information of the terminal device, and send the one or more authorized reader roles to the access network device.

In another implementation, if the access network device determines an authorized reader role of the terminal device, the context request includes the capability information of the terminal device and/or the subscription data of the terminal device. Optionally, in this implementation, the access network device may further send the authorized reader role of the terminal device that is determined by the access network device to the AMF. For example, the authorized reader role may be carried in a context response (for example, a context setup response or a context modification response) and sent to the AMF.

For more understandings of the authorized reader role of the terminal device, refer to the related descriptions in FIG. 5. Details are not described herein again.

S709: The AMF sends a NAS message to the terminal device. Correspondingly, the terminal device receives the NAS message from the AMF.

For example, the NAS message may be a registration accept message or a registration reject message. Optionally, the registration reject message indicates that the terminal device needs to access a cell that supports the internet of things service. The NAS message may include at least one piece of identification information of a cell that supports the internet of things service. The at least one piece of identification information includes identification information of the first cell.

Optionally, the NAS message may include the one or more authorized reader roles of the terminal device.

S710: The terminal device sends a first request message to the access network device. Correspondingly, the access network device receives the first request message from the terminal device.

The first request message is used to request to serve as a first reader role. For example, the first reader role may be determined by the terminal device based on the one or more authorized reader roles of the terminal device that are included in the NAS message. S710 is an optional step.

For more understandings of the first request message, refer to the related descriptions in FIG. 5. Details are not described herein again.

S711: The access network device determines a target reader role.

The access network device may determine the target reader role from the one or more authorized reader roles based on one or more of the capability information of the terminal device, the first request message, a status of a link between the access network device and an internet of things terminal, a radio resource status of the access network device, or the like. For details, refer to the related descriptions in step S501 in FIG. 5. Details are not described herein again.

For more understandings of determining the target reader role by the access network device, refer to the related descriptions of step S501 in FIG. 5. Details are not described herein again.

S712: The access network device sends first information to the terminal device. Correspondingly, the terminal device receives the first information from the access network device.

In an implementation, the first information indicates the terminal device to execute the target reader role. For example, the first information may be carried in an AN message. Optionally, the AN message may further include resource configuration information, and the resource configuration information includes one or more of the following information: frequency information, frequency band information, a transmit power, a transmission bandwidth, a transmission rate, execution duration, or the like. The resource configuration information may be used to execute the target reader role.

For more understandings of sending the first information by the access network device to the terminal device, refer to the related descriptions of step S502 in FIG. 5. Details are not described herein again.

S713: The terminal device sends fifth information to the access network device. Correspondingly, the access network device receives the fifth information from the terminal device.

The fifth information indicates whether the terminal device accepts execution of the target reader role. For example, the fifth information may be carried in an AN message. Step S713 is an optional step.

For more understandings of sending the fifth information by the terminal device to the access network device, refer to the related descriptions in FIG. 6. Details are not described herein again.

S714: The terminal device performs cell reselection/handover, to access the first cell.

The terminal device performs cell reselection based on the one or more pieces of cell identification information in step S709 or based on the second indication information in the broadcast message (for example, the SIB) in step S700, to access the first cell. The first cell is a cell that supports the internet of things service.

In a possible implementation, after receiving the first information, the terminal device learns that a cell that supports the internet of things service needs to be selected, and performs cell reselection or handover based on the one or more pieces of cell identification information sent by the AMF or based on the broadcast message. Optionally, the first information may further indicate the terminal device to select a cell that supports the internet of things service. The terminal device may check, based on the first information, whether a currently accessed cell supports the internet of things service, and if not, perform cell reselection or handover. For example, the terminal device may specifically perform cell reselection or handover based on the one or more pieces of cell identification information sent by the AMF, or perform cell reselection or handover based on the broadcast message, to access the first cell.

It may be understood that, before executing the target reader role, the terminal device may perform step S714. In other words, after step S714, the terminal device may execute the target reader role. It may be understood that the terminal device may use a resource indicated by the resource configuration information to execute a function of the target reader role. In an implementation, the terminal device may trigger/enable/activate, based on an operation performed by a user on a terminal interface, the terminal device to use the resource to execute the function of the target reader role. In another implementation, the terminal device may decide/determine to execute a reader role based on an operation performed by a user on a terminal interface, and after receiving the resource configuration information sent by the access network device, the terminal device may execute the target reader role based on the resource configuration information.

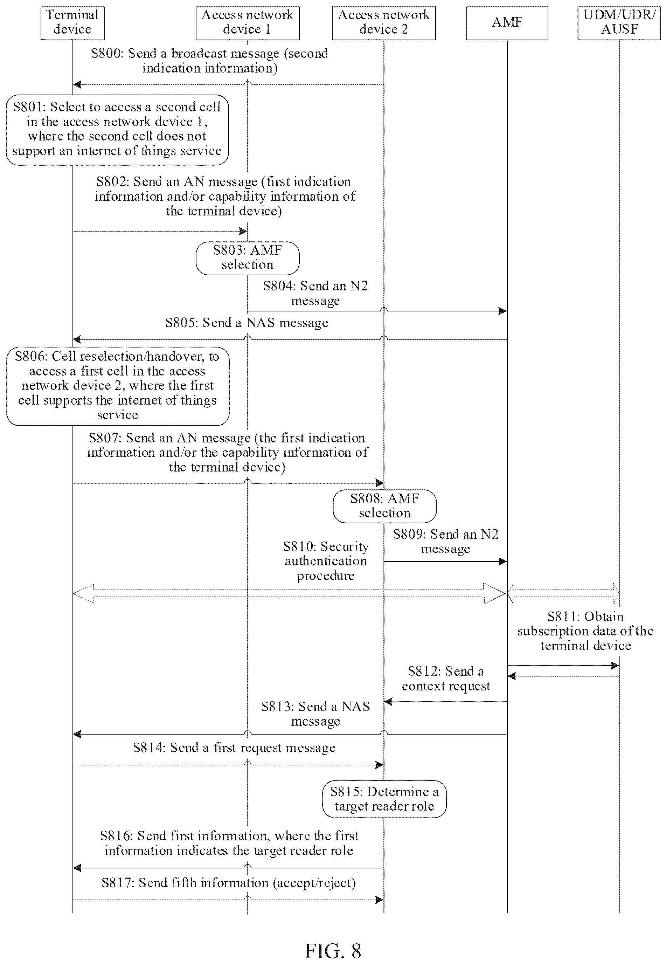

Optionally, FIG. 8 is another schematic flowchart of a communication method according to an embodiment of this application. In FIG. 8, an example in which a first core network device is an AMF and a second core network device is a UDM or a UDR is used for description. An access network device 1 in FIG. 8 may support a plurality of cells, and none of the plurality of cells supports an internet of things service. An access network device 2 in FIG. 8 may support a plurality of cells. Some cells (for example, a first cell) support the internet of things service, and some cells (for example, a second cell) do not support the internet of things service; or all of the cells in the access network device 2 support the internet of things service. Details are shown in FIG. 8.

S800: The access network device 2 sends a broadcast message. Correspondingly, a terminal device receives the broadcast message from the access network device 2.

The broadcast message (for example, a SIB) may include second indication information. The second indication information indicates that the first cell in the access network device 2 supports the internet of things service, or the second indication information indicates one or more cells that support the internet of things service in the access network device 2, and the one or more cells that support the internet of things service include the first cell. S800 is an optional step.

For more understandings of the second indication information, refer to the related descriptions in S500 in FIG. 5. Details are not described herein again.

S801: The terminal device selects to access a second cell in the access network device 1, where the second cell is a cell that does not support the internet of things service.

S802: The terminal device sends an AN message to the access network device 1. Correspondingly, the access network device 1 receives the AN message from the terminal device.

The AN message includes information such as first indication information and/or capability information of the terminal device. For example, the first indication information and/or the capability information of the terminal device may be carried in a NAS message (for example, a registration request) of the AN message. The first indication information indicates that the terminal device supports the internet of things service. The capability information of the terminal device indicates a reader role supported by the terminal device. For example, the capability information of the terminal device may indicate one or more of the following roles: an uplink assisted reader, a downlink assisted reader, an assisted reader, a reader, or a carrier assisted reader.

For more understandings of the first indication information and the capability information of the terminal device, refer to the related descriptions in FIG. 5. Details are not described herein again.

S803: The access network device 1 performs AMF selection.

It should be noted that because the access network device 1 is incapable of selecting, based on the first indication information, an AMF that supports the internet of things service, the access network device 1 may select an AMF that supports internet of things service management, or may select an AMF that does not support internet of things service management. In a possible implementation, if the AMF selected by the access network device 1 does not support the internet of things service, the AMF that supports the internet of things service may be selected through AMF redirection (for example, AMF relocation). For ease of understanding, in this embodiment of this application, an example in which the access network device 1 selects the AMF that supports internet of things service management is mainly used for description.

S804: The access network device 1 sends an N2 message to the AMF. Correspondingly, the AMF receives the N2 message from the access network device 1. The N2 message includes a NAS message (for example, a registration request).

S805: The AMF sends a NAS message to the terminal device. Correspondingly, the terminal device receives the NAS message from the AMF.

The NAS message includes at least one piece of identification information of a cell that supports the internet of things service. The at least one piece of identification information includes identification information of the first cell in the access network device 2. In a possible implementation, the NAS message in step S805 is a registration accept message or a registration reject message. Optionally, the registration reject message indicates that the terminal device needs to access a cell that supports the internet of things service.

Optionally, the NAS message may include information such as one or more authorized reader roles of the terminal device that are determined by the AMF.

For understandings of the authorized reader role of the terminal device, refer to the related descriptions in FIG. 5. Details are not described herein again.

S806: The terminal device performs cell reselection/handover, to access the first cell in the access network device 2.

In a possible implementation, the terminal device may perform cell reselection based on the one or more pieces of cell identification information in the NAS message in step S805, to access the first cell in the access network device 2.

Optionally, in another possible implementation, the terminal device may alternatively select the first cell based on the second indication information in the broadcast message (for example, the SIB) in step S800. For example, the terminal device may perform cell reselection based on the NAS message sent by the AMF. For example, the NAS message indicates that a currently accessed cell does not support the internet of things service, or the NAS message indicates a cell that supports the internet of things service.

The first cell is a cell that supports the internet of things service.

Optionally, after step S806, the terminal device may initiate a registration procedure or a handover procedure to the access network device 2, that is, S807 to S817 in FIG. 8 are performed.

S807: The terminal device sends an AN message to the access network device 2. Correspondingly, the access network device 2 receives the AN message from the terminal device.

The AN message includes information such as the first indication information and/or the capability information of the terminal device. For example, the first indication information and/or the capability information of the terminal device may be carried in a NAS message (for example, a registration request) of the AN message. The first indication information indicates that the terminal device supports the internet of things service. The capability information of the terminal device indicates a reader role supported by the terminal device. For example, the capability information of the terminal device may indicate one or more of the following roles: an uplink assisted reader, a downlink assisted reader, an assisted reader, a reader, or a carrier assisted reader.

S808: The access network device 2 performs AMF selection (AMF selection).

In a possible implementation, the access network device 2 performs AMF selection based on a cell that supports the internet of things service and that is accessed by the terminal device, or performs AMF selection based on the first indication information sent by the terminal device. For example, the AMF is an AMF that supports the internet of things service.

S809: The access network device 2 sends an N2 message to the AMF. Correspondingly, the AMF receives the N2 message from the access network device 2.

The N2 message includes a NAS message (for example, a registration request).

S810: The terminal device, the AMF, an AUSF, and the UDM perform a security authentication procedure of the terminal device.

S811: The AMF interacts with the UDM/UDR to obtain subscription data of the terminal device.

For understandings of the subscription data, refer to the related descriptions in FIG. 5. Details are not described herein again.

S812: The AMF sends a context request to the access network device 2. Correspondingly, the access network device 2 receives the context request from the AMF.

S813: The AMF sends a NAS message to the terminal device. Correspondingly, the terminal device receives the NAS message from the AMF. For example, the NAS message is a registration accept message.

S814: The terminal device sends a first request message to the access network device 2. Correspondingly, the access network device 2 receives the first request message from the terminal device.

For more understandings of the first request message, refer to the related descriptions in FIG. 5. Details are not described herein again. S814 is an optional step.

S815: The access network device 2 determines a target reader role.

For more understandings of determining the target reader role by the access network device 2, refer to the related descriptions of step S501 in FIG. 5. Details are not described herein again.

S816: The access network device 2 sends first information to the terminal device. Correspondingly, the terminal device receives the first information from the access network device 2. The first information indicates the target reader role.

For more understandings of sending the first information by the access network device 2 to the terminal device, refer to the related descriptions of step S502 in FIG. 5. Details are not described herein again.

S817: The terminal device sends fifth information to the access network device 2. Correspondingly, the access network device 2 receives the fifth information from the terminal device. Step S817 is an optional step.

It should be noted that for understandings of S807 to S817, refer to the related descriptions of S602 to S612 shown in FIG. 6. Details are not described herein again.

It should be noted that, in embodiments (for example, the embodiments shown in FIG. 5, FIG. 6, FIG. 7, and FIG. 8) of this application, terms and/or descriptions in different embodiments are consistent and may be referenced by each other unless otherwise specified and a logical conflict occurs.

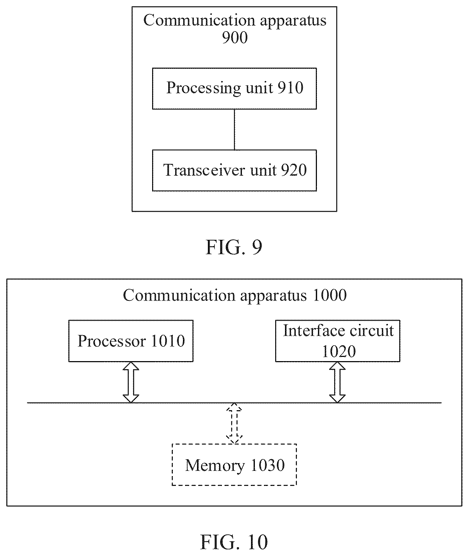

The following describes in detail communication apparatuses provided in this application with reference to FIG. 9 and FIG. 10.

It may be understood that, to implement functions in the foregoing embodiments, the communication apparatus includes corresponding hardware structures and/or software modules for performing the functions. A person skilled in the art should be easily aware that, in combination with units and method steps of the examples described in embodiments disclosed in this application, this application may be implemented by using hardware or a combination of hardware and computer software. Whether a function is performed by hardware or hardware driven by computer software depends on particular application scenarios and design constraints of the technical solutions.

FIG. 9 and FIG. 10 are diagrams of possible structures of communication apparatuses according to embodiments of this application. These communication apparatuses may be configured to implement functions of the terminal device, the access network device, or the first core network device in the foregoing method embodiments, and therefore may also implement beneficial effects of the foregoing method embodiments. In embodiments of this application, the communication apparatus may be one of the terminal devices 120a to 120j shown in FIG. 1, or may be the access network device 110a or 110b shown in FIG. 1, or may be a module (for example, a chip) used in the terminal device, the access network device, or the first core network device.

As shown in FIG. 9, a communication apparatus 900 includes a processing unit 910 and a transceiver unit 920. The communication apparatus 900 is configured to implement functions of the terminal device, the access network device, or the first core network device in the method embodiment shown in any one of FIG. 5 to FIG. 8.

When the communication apparatus 900 is configured to implement the functions of the terminal device in the method embodiment shown in any one of FIG. 5 to FIG. 8:
the transceiver unit 920 is configured to send a first request message to an access network device, where the first request message is used to request to serve as a first reader role; and
the transceiver unit 920 is configured to receive first information from the access network device, where the first information indicates the terminal device to execute a target reader role.

In a possible implementation, the transceiver unit 920 is further configured to receive one or more authorized reader roles of the terminal device from a first core network device.

The processing unit 910 is further configured to determine the first reader role based on the one or more authorized reader roles of the terminal device.

In a possible implementation, the transceiver unit 920 is configured to:
send capability information of the terminal device to the access network device, where the capability information of the terminal device indicates a reader capability supported by the terminal device, and the capability information of the terminal device is used to determine the target reader role.

In a possible implementation, the transceiver unit 920 is configured to:
send first indication information to the access network device, where the first indication information indicates that the terminal device supports an internet of things service, and the first indication information is used to determine the first core network device that supports management of the internet of things service.

In a possible implementation, a cell accessed by the terminal device is a second cell, and the second cell does not support the internet of things service.

The transceiver unit 920 is further configured to receive second indication information from the access network device, where the second indication information indicates that a first cell supports the internet of things service, or the second indication information indicates that one or more cells in the access network device support the internet of things service, and the one or more cells include the first cell.

The processing unit 910 is further configured to perform cell reselection or cell handover based on the second indication information, to access the first cell.

In a possible implementation, a cell accessed by the terminal device is a second cell in the access network device, and the second cell does not support the internet of things service.

The transceiver unit 920 is further configured to:
receive at least one cell identifier from the first core network device, where a cell corresponding to the at least one cell identifier is a cell that supports the internet of things service in the access network device, and the cell corresponding to the at least one cell identifier includes a first cell; and
perform cell reselection or cell handover based on the at least one cell identifier, to access the first cell.

In a possible implementation, a cell accessed by the terminal device is a second cell, and none of cells in an access network device in which the second cell is located supports the internet of things service.

The processing unit 910 is further configured to receive at least one cell identifier from the first core network device, where a cell corresponding to the at least one cell identifier is a cell that supports the internet of things service in the access network device, and the cell corresponding to the at least one cell identifier includes a first cell.

The processing unit 910 is further configured to perform cell reselection or cell handover based on the at least one cell identifier, to access the first cell.

In a possible implementation, the transceiver unit 920 is further configured to:
receive resource configuration information from the access network device, where the resource configuration information includes one or more of the following information: frequency information, frequency band information, a transmit power, a transmission bandwidth, a transmission rate, or execution duration, and the resource configuration information is used by the terminal device to execute the target reader role.

In a possible implementation, after receiving the first information from the access network device, the transceiver unit 920 is further configured to:
send fifth information to the access network device, where the fifth information indicates whether the terminal device accepts execution of the target reader role.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

When the communication apparatus 900 is configured to implement the functions of the access network device in the method embodiment shown in any one of FIG. 5 to FIG. 8:
the processing unit 910 is configured to determine a target reader role of a terminal device; and
the transceiver unit 920 is configured to send first information to the terminal device, where the first information indicates the terminal device to execute the target reader role.

In a possible implementation, when determining the target reader role of the terminal device, the processing unit 910 is configured to:
obtain one or more authorized reader roles of the terminal device; and
determine the target reader role of the terminal device from the one or more authorized reader roles.

In a possible implementation, when obtaining the one or more authorized reader roles of the terminal device, the processing unit 910 is configured to:
receive the one or more authorized reader roles of the terminal device from a first core network device by using the transceiver unit 920.

In a possible implementation, when obtaining the one or more authorized reader roles of the terminal device, the processing unit 910 is configured to:
determine the one or more authorized reader roles of the terminal device based on second information, where the second information includes one or more of the following information: capability information of the terminal device and/or subscription data of the terminal device.

The capability information of the terminal device indicates a reader role supported by the terminal device, and the subscription data of the terminal device indicates a reader role that the terminal device is allowed to serve as.

In a possible implementation, the transceiver unit 920 is configured to:
send the one or more authorized reader roles of the terminal device to a first core network device, so that the first core network device sends the one or more authorized reader roles of the terminal device to the terminal device.

In a possible implementation, the processing unit 910 is configured to:
obtain third information, where the third information includes one or more of the following information: the capability information of the terminal device, a first request message from the terminal device, a status of a link between the access network device and an internet of things terminal, or a radio resource status of the access network device, the capability information of the terminal device indicates the reader role supported by the terminal device, and the first request message is used to request to serve as a first reader role; and
determine the target reader role from the one or more authorized reader roles based on the third information.

In a possible implementation, when determining the target reader role of the terminal device from the one or more authorized reader roles based on the third information, the processing unit 910 is configured to:
determine, as the target reader role, the reader role that is supported by the terminal device and that is indicated by the capability information of the terminal device in the one or more authorized reader roles; or
determine the first reader role in the one or more authorized reader roles as the target reader role; or
when an uplink budget between the access network device and the internet of things terminal is less than a downlink budget, and the one or more authorized reader roles include an uplink assisted reader, determine that the target reader role is an uplink assisted reader; or
when a downlink budget between the access network device and the internet of things terminal is less than an uplink budget, and the one or more authorized reader roles include a downlink assisted reader, determine that the target reader role is a downlink assisted reader.

In a possible implementation, when determining the target reader role of the terminal device, the processing unit 910 is configured to:
obtain fourth information, where the fourth information includes one or more of the following information: capability information of the terminal device, subscription data of the terminal device, a first request message from the terminal device, a status of a link between the access network device and an internet of things terminal, or a radio resource status of the access network device, the capability information of the terminal device indicates a reader role supported by the terminal device, and the first request message is used to request to serve as a first reader role; and
determine the target reader role based on the fourth information.

In a possible implementation, the transceiver unit 920 is configured to:
receive the capability information of the terminal device that is sent by the first core network device, where the first core network device supports internet of things service management; or
receive the capability information of the terminal device that is sent by the terminal device.

In a possible implementation, when receiving the capability information of the terminal device that is sent by the first core network device, the transceiver unit 920 is configured to:
in a registration process, receive a context request or a terminal device capability check request sent by the first core network device, where the context request or the terminal device capability check request includes the capability information of the terminal device.

In a possible implementation, the transceiver unit 920 is further configured to receive first indication information from the terminal device, where the first indication information indicates that the terminal device supports an internet of things service.

The processing unit 910 is further configured to select, based on the first indication information, the first core network device that supports management of the internet of things service.

In a possible implementation, the processing unit 910 is configured to:
when a first cell accessed by the terminal device supports the internet of things service, select the first core network device based on the first cell accessed by the terminal device, where the first core network device supports management of the internet of things service.

In a possible implementation, the transceiver unit 920 is configured to:
broadcast second indication information, where the second indication information indicates that the first cell supports the internet of things service, or the second indication information indicates that one or more cells in the access network device support the internet of things service, so that the terminal device accesses, based on the second indication information, the first cell that supports the internet of things service, where the one or more cells include the first cell.

In a possible implementation, the transceiver unit 920 is configured to:
send resource configuration information to the terminal device, where the resource configuration information includes one or more of the following information: frequency information, frequency band information, a transmit power, a transmission bandwidth, a transmission rate, or execution duration, and the resource configuration information is used by the terminal device to execute the target reader role.

In a possible implementation, after sending the first information to the terminal device, the transceiver unit 920 is further configured to:
receive fifth information from the terminal device, where the fifth information indicates whether the terminal device accepts execution of the target reader role.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

When the communication apparatus 900 is configured to implement the functions of the first core network device in the method embodiment shown in any one of FIG. 5 to FIG. 8, in an implementation:
the processing unit 910 is configured to obtain one or more authorized reader roles of a terminal device; and
the transceiver unit 920 is configured to send the one or more authorized reader roles of the terminal device to the terminal device, where the one or more authorized reader roles are used to determine a target reader role.

In a possible implementation, when obtaining the one or more authorized reader roles of the terminal device, the processing unit 910 is configured to:
determine the one or more authorized reader roles of the terminal device based on capability information of the terminal device and/or subscription data of the terminal device, where the capability information of the terminal device indicates a reader capability supported by the terminal device, and the subscription data of the terminal device indicates a reader role that the terminal device is allowed to serve as.

In a possible implementation, the transceiver unit 920 is configured to:
send the one or more authorized reader roles of the terminal device to an access network device.

In a possible implementation, when obtaining the one or more authorized reader roles of the terminal device, the processing unit 910 is configured to:
receive the one or more authorized reader roles of the terminal device from an access network device by using the transceiver unit 920.

In a possible implementation, before receiving the one or more authorized reader roles of the terminal device from the access network device, the transceiver unit 920 is configured to:
send capability information of the terminal device to the access network device.

In a possible implementation, the transceiver unit 920 is configured to:
receive the capability information from the terminal device.

In a possible implementation, the transceiver unit 920 is configured to:
send at least one cell identifier to the terminal device, where a cell corresponding to the at least one cell identifier includes a first cell, the cell corresponding to the at least one cell identifier is a cell that supports an internet of things service, and the at least one cell identifier is used for cell reselection or cell handover, so that the terminal device accesses the first cell.

In a possible implementation, the first core network device is a first core network device that supports the internet of things service.

In a possible implementation, the target reader role or the one or more authorized reader roles of the terminal device include the following role: an assisted reader, an uplink assisted reader, a downlink assisted reader, a reader, or a carrier assisted reader.

When the communication apparatus 900 is configured to implement the functions of the first core network device in the method embodiment shown in any one of FIG. 5 to FIG. 8, in another implementation:
the processing unit 910 is configured to obtain one or more authorized reader roles of a terminal device; and
the transceiver unit 920 is configured to send the one or more authorized reader roles of the terminal device to an access network device, where the one or more authorized reader roles are used to determine a target reader role.

In a possible implementation, when obtaining the one or more authorized reader roles of the terminal device, the processing unit 910 is configured to:
determine the one or more authorized reader roles of the terminal device based on capability information of the terminal device and/or subscription data of the terminal device, where the capability information of the terminal device indicates a reader capability supported by the terminal device, and the subscription data of the terminal device indicates a reader role that the terminal device is allowed to serve as.

In a possible implementation, the transceiver unit 920 is further configured to:
receive the capability information from the terminal device.

In a possible implementation, the transceiver unit 920 is further configured to:
receive the subscription data of the terminal device from a second core network device.

In a possible implementation, the transceiver unit 920 is further configured to:
send the one or more authorized reader roles of the terminal device to the terminal device.

In a possible implementation, the transceiver unit 920 is further configured to:
send at least one cell identifier to the terminal device, where a cell corresponding to the at least one cell identifier includes a first cell, the cell corresponding to the at least one cell identifier is a cell that supports an internet of things service, and the at least one cell identifier is used for cell reselection or cell handover, so that the terminal device accesses the first cell.

In a possible implementation, the first core network device is a first core network device that supports the internet of things service.

In a possible implementation, the target reader role or the one or more authorized reader roles of the terminal device include the following role: an assisted reader, an uplink assisted reader, a downlink assisted reader, a reader, or a carrier assisted reader.

In a possible implementation, the first core network device includes an access management device, a tag management device, an ambient power-obtained internet of things management device, a unified data management device, a user data storage device, a network capability exposure device, a policy control device, or a session management device.

In a possible implementation, the second core network device includes a unified data management device, a user data storage device, a network capability exposure device, a policy control device, a session management device, a tag management device, an ambient power-enabled internet of things device, an ambient power-obtained internet of things terminal management device, or an authentication service device.

For more detailed descriptions of the processing unit 910 and the transceiver unit 920, refer to the related descriptions in the method embodiment shown in any one of FIG. 5 to FIG. 8.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, or store input data required by the processor 1010 to run the instructions, or store data generated after the processor 1010 runs the instructions.

When the communication apparatus 1000 is configured to implement the method shown in any one of FIG. 5 to FIG. 8, the processor 1010 is configured to implement functions of the processing unit 910, and the interface circuit 1020 is configured to implement functions of the transceiver unit 920.

When the communication apparatus is a chip used in a terminal device, the chip in the terminal device implements functions of the terminal device in the foregoing method embodiment. The chip in the terminal device receives, by using another module (for example, a radio frequency module or an antenna) in the terminal device, information sent by an access network device to the terminal device; or the chip in the terminal device sends information to another module (for example, a radio frequency module or an antenna) in the terminal device, where the information is sent by the terminal device to an access network device.

When the communication apparatus is a module used in an access network device, the module in the access network device implements functions of the access network device in the foregoing method embodiment. The module in the access network device receives information from another module (for example, a radio frequency module or an antenna) in the access network device, where the information is sent by a terminal device to the access network device; or the module in the access network device sends information to another module (for example, a radio frequency module or an antenna) in the access network device, where the information is sent by the access network device to a terminal device. The module in the access network device herein may be a baseband chip in the access network device, or may be a CU, a DU, or another module, or may be an apparatus in an open radio access network (open radio access network, O-RAN) architecture, for example, an apparatus like an open CU or an open DU.

It may be understood that the processor in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or a terminal device. The processor and the storage medium may alternatively exist as discrete components in the access network device or the terminal device.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a special-purpose computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining a target reader role of a terminal device; and
sending first information to the terminal device, wherein the first information indicates the terminal device to execute the target reader role.

2. The method according to claim 1, wherein the determining the target reader role of the terminal device comprises:
obtaining one or more authorized reader roles of the terminal device; and
determining the target reader role of the terminal device from the one or more authorized reader roles.

3. The method according to claim 2, wherein the obtaining the one or more authorized reader roles of the terminal device comprises:
receiving the one or more authorized reader roles of the terminal device from a first core network device.

4. The method according to claim 2, wherein the obtaining the one or more authorized reader roles of the terminal device comprises:
determining the one or more authorized reader roles of the terminal device based on second information, wherein the second information comprises one or more of the following information: capability information of the terminal device and/or subscription data of the terminal device, wherein
the capability information of the terminal device indicates a reader role supported by the terminal device, and the subscription data of the terminal device indicates a reader role that the terminal device is allowed to serve as.

5. The method according to claim 4, wherein the method further comprises:
sending the one or more authorized reader roles of the terminal device to a first core network device, so that the first core network device sends the one or more authorized reader roles of the terminal device to the terminal device.

6. The method according to any one of claims 2 to 5, wherein the method further comprises:
obtaining third information, wherein the third information comprises one or more of the following information: the capability information of the terminal device, a first request message from the terminal device, a status of a link between the access network device and an internet of things terminal, or a radio resource status of the access network device, the capability information of the terminal device indicates the reader role supported by the terminal device, and the first request message is used to request to serve as a first reader role; and
the determining the target reader role of the terminal device from the one or more authorized reader roles comprises:
determining the target reader role from the one or more authorized reader roles based on the third information.

7. The method according to claim 6, wherein the determining the target reader role of the terminal device from the one or more authorized reader roles based on the third information comprises:
determining, as the target reader role, the reader role that is supported by the terminal device and that is indicated by the capability information of the terminal device in the one or more authorized reader roles; or
determining the first reader role in the one or more authorized reader roles as the target reader role; or
when an uplink budget between the access network device and the internet of things terminal is less than a downlink budget, and the one or more authorized reader roles comprise an uplink assisted reader, determining that the target reader role is an uplink assisted reader; or
when a downlink budget between the access network device and the internet of things terminal is less than an uplink budget, and the one or more authorized reader roles comprise a downlink assisted reader, determining that the target reader role is a downlink assisted reader.

8. The method according to claim 1, wherein the determining the target reader role of the terminal device comprises:
obtaining fourth information, wherein the fourth information comprises one or more of the following information: capability information of the terminal device, subscription data of the terminal device, a first request message from the terminal device, a status of a link between the access network device and an internet of things terminal, or a radio resource status of the access network device, the capability information of the terminal device indicates a reader role supported by the terminal device, and the first request message is used to request to serve as a first reader role; and
determining the target reader role based on the fourth information.

9. The method according to any one of claims 4 to 8, wherein the method further comprises:
receiving the capability information of the terminal device that is sent by the first core network device, wherein the first core network device supports internet of things service management; or
receiving the capability information of the terminal device that is sent by the terminal device.

10. The method according to claim 9, wherein the receiving the capability information of the terminal device that is sent by the first core network device comprises:
in a registration process, receiving a context request or a terminal device capability check request sent by the first core network device, wherein the context request or the terminal device capability check request comprises the capability information of the terminal device.

11. The method according to any one of claims 1 to 10, wherein the method further comprises:
receiving first indication information from the terminal device, wherein the first indication information indicates that the terminal device supports an internet of things service; and
selecting, based on the first indication information, the first core network device that supports management of the internet of things service.

12. The method according to any one of claims 1 to 10, wherein the method further comprises:
when a first cell accessed by the terminal device supports the internet of things service, selecting the first core network device based on the first cell accessed by the terminal device, wherein the first core network device supports management of the internet of things service.

13. The method according to any one of claims 1 to 12, wherein the method further comprises:
broadcasting second indication information, wherein the second indication information indicates that the first cell supports the internet of things service, or the second indication information indicates that one or more cells in the access network device support the internet of things service, so that the terminal device accesses, based on the second indication information, the first cell that supports the internet of things service, wherein the one or more cells comprise the first cell.

14. The method according to any one of claims 1 to 13, wherein the method further comprises:
sending resource configuration information to the terminal device, wherein the resource configuration information is used by the terminal device to execute the target reader role.

15. The method according to claim 14, wherein the resource configuration information comprises one or more of the following information: frequency information, frequency band information, a transmit power, a transmission bandwidth, a transmission rate, or execution duration.

16. The method according to any one of claims 1 to 15, wherein after the sending the first information to the terminal device, the method further comprises:
receiving fifth information from the terminal device, wherein the fifth information indicates whether the terminal device accepts execution of the target reader role.

17. The method according to any one of claims 1 to 16, wherein the target reader role or the one or more authorized reader roles of the terminal device comprise the following role: an uplink assisted reader, a downlink assisted reader, a reader, or a carrier assisted reader.

18. A communication method, comprising:
sending a first request message to the access network device, wherein the first request message is used to request to serve as a first reader role; and
receiving first information from the access network device, wherein the first information indicates the terminal device to execute a target reader role.

19. The method according to claim 18, wherein the method further comprises:
receiving one or more authorized reader roles of the terminal device from a first core network device; and
determining the first reader role based on the one or more authorized reader roles of the terminal device.

20. The method according to claim 18 or 19, wherein the method further comprises:
sending capability information of the terminal device to the access network device, wherein the capability information of the terminal device indicates a reader capability supported by the terminal device, and the capability information of the terminal device is used to determine the target reader role.

21. The method according to any one of claims 18 to 20, wherein the method further comprises:
sending first indication information to the access network device, wherein the first indication information indicates that the terminal device supports an internet of things service, and the first indication information is used to determine the first core network device that supports management of the internet of things service.

22. The method according to any one of claims 18 to 21, wherein a cell accessed by the terminal device is a second cell, and the second cell does not support the internet of things service; and
the method further comprises:
receiving second indication information from the access network device, wherein the second indication information indicates that a first cell supports the internet of things service, or the second indication information indicates that one or more cells in the access network device support the internet of things service, and the one or more cells comprise the first cell; and
performing cell reselection or cell handover based on the second indication information, to access the first cell.

23. The method according to any one of claims 18 to 21, wherein a cell accessed by the terminal device is a second cell in the access network device, and the second cell does not support the internet of things service; and
the method further comprises:
receiving at least one cell identifier from the first core network device, wherein a cell corresponding to the at least one cell identifier is a cell that supports the internet of things service in the access network device, and the cell corresponding to the at least one cell identifier comprises a first cell; and
performing cell reselection or cell handover based on the at least one cell identifier, to access the first cell.

24. The method according to any one of claims 18 to 21, wherein a cell accessed by the terminal device is a second cell, and none of cells in an access network device in which the second cell is located supports the internet of things service; and
the method further comprises:
receiving at least one cell identifier from the first core network device, wherein a cell corresponding to the at least one cell identifier is a cell that supports the internet of things service in the access network device, and the cell corresponding to the at least one cell identifier comprises a first cell; and
performing cell reselection or cell handover based on the at least one cell identifier, to access the first cell.

25. The method according to any one of claims 18 to 24, wherein the method further comprises:
receiving resource configuration information from the access network device, wherein the resource configuration information is used by the terminal device to execute the target reader role.

26. The method according to claim 25, wherein the resource configuration information comprises one or more of the following information: frequency information, frequency band information, a transmit power, a transmission bandwidth, a transmission rate, or execution duration.

27. The method according to any one of claims 18 to 26, wherein after the receiving the first information from the access network device, the method further comprises:
sending fifth information to the access network device, wherein the fifth information indicates whether the terminal device accepts execution of the target reader role.

28. The method according to any one of claims 18 to 27, wherein the target reader role or the one or more authorized reader roles of the terminal device comprise the following role: an uplink assisted reader, a downlink assisted reader, a reader, or a carrier assisted reader.

29. A communication method, comprising:
obtaining one or more authorized reader roles of a terminal device; and
sending the one or more authorized reader roles of the terminal device to the terminal device, wherein the one or more authorized reader roles are used to determine a target reader role.

30. The method according to claim 29, wherein the obtaining the one or more authorized reader roles of the terminal device comprises:
determining the one or more authorized reader roles of the terminal device based on capability information of the terminal device and/or subscription data of the terminal device, wherein the capability information of the terminal device indicates a reader capability supported by the terminal device, and the subscription data of the terminal device indicates a reader role that the terminal device is allowed to serve as.

31. The method according to claim 30, wherein the method further comprises:
sending the one or more authorized reader roles of the terminal device to the access network device.

32. The method according to claim 29, wherein the obtaining the one or more authorized reader roles of the terminal device comprises:
receiving the one or more authorized reader roles of the terminal device from the access network device.

33. The method according to claim 32, wherein before the receiving the one or more authorized reader roles of the terminal device from the access network device, the method further comprises:
sending capability information of the terminal device to the access network device.

34. The method according to claim 30, 31, or 33, wherein the method further comprises:
receiving the capability information from the terminal device.

35. The method according to any one of claims 29 to 34, wherein the method further comprises:
sending at least one cell identifier to the terminal device, wherein a cell corresponding to the at least one cell identifier comprises a first cell, the cell corresponding to the at least one cell identifier is a cell that supports the internet of things service, and the at least one cell identifier is used for cell reselection or cell handover, so that the terminal device accesses the first cell.

36. The method according to any one of claims 29 to 35, wherein the first core network device is a first core network device that supports the internet of things service.

37. The method according to any one of claims 29 to 36, wherein the target reader role or the one or more authorized reader roles of the terminal device comprise the following role: an uplink assisted reader, a downlink assisted reader, a reader, or a carrier assisted reader.

38. A communication apparatus, comprising a unit or a module configured to perform the method according to any one of claims 1 to 17, or comprising a unit or a module configured to perform the method according to any one of claims 18 to 28, or comprising a unit or a module configured to perform the method according to any one of claims 29 to 37.

39. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 1 to 17, the method according to any one of claims 18 to 28, or the method according to any one of claims 29 to 37 by using a logic circuit or by executing code instructions.

40. A computer-readable storage medium, wherein the storage medium stores a computer program or instructions, and when the computer program or the instructions are executed by a communication apparatus, the method according to any one of claims 1 to 17 is implemented, or the method according to any one of claims 18 to 28 is implemented, or the method according to any one of claims 29 to 37 is implemented.

41. A computer program product, comprising computer program code, wherein when the computer program code is run on a computer, the method according to any one of claims 1 to 17 is implemented, or the method according to any one of claims 18 to 28 is implemented, or the method according to any one of claims 29 to 37 is implemented.
